# EUROPEAN PATENT APPLICATION

(11) **EP 3 756 885 A1**
(43) Date of publication of application: **30.12.2020**
(21) Application number: 19757134.2
(22) Date of filing: 28.01.2019
(51) Int. Cl.: B32B 27/30, C08J 7/04, C09D 7/63, C09D 7/65, C09D 181/00, G02B 5/02

(54) **ANTIGLARE HARDCOAT MULTILAYER FILM**

(30) Priority: 22.02.2018 JP 2018029307
(71) Applicant: Riken Technos Corporation, Tokyo 101-8336 (JP)
(72) Inventor: FUJIMOTO, Jun, Tokyo 101-8336 (JP); HASHIMOTO, Taketo, Tokyo 101-8336 (JP)
(74) Representative: J A Kemp LLP
(86) International application number: PCT/JP2019/002639
(87) International publication number: WO 2019/163416

(57) **Abstract**

One aspect of the present invention is a hardcoat multilayer film which comprises a first hardcoat and a transparent resin film layer in this order from the surface layer side, wherein the first hardcoat has been formed from a coating material that comprises (A) 100 parts by mass of a copolymer of (al) a polyfunctional (meth)acrylate and (a2) a polyfunctional thiol, (B) 0.01-7 parts by mass of a water repellent, and (C) 0.1-10 parts by mass of fine resin particles having an average particle diameter of 0.5-10 µm and that contains no inorganic particles. Another aspect of the present invention is a hardcoat multilayer film which comprises a first hardcoat and a transparent resin film layer in this order from the surface layer side, wherein the first hardcoat has been formed from a coating material that comprises (A) a copolymer of (al) a polyfunctional (meth)acrylate and (a2) a polyfunctional thiol, (B) a water repellent, and (C) fine resin particles having an average particle diameter of 0.5-10 µm and that contains no inorganic particles, and which satisfies given requirements concerning abrasion resistance, total light transmittance, and the Y value of the XYZ color system based on a 2-degree field of view.

## Description

### TECHNICAL FIELD

The present invention relates to an antiglare hard coat laminated film. More specifically, the present invention relates to an antiglare hard coat laminated film exhibiting good abrasion resistance.

### BACKGROUND ART

In recent years, car navigation devices equipped with touch panels which are installed on image display devices such as liquid crystal displays, plasma displays, and electroluminescent displays and can perform input by touching the display with a finger, a pen and the like while watching the display have become widespread.

In the car navigation devices, from the viewpoint of safety at the time of traffic accident just in case, for example, it is widely performed to use a plastic display face plate or to paste a shatterproof film on the surface of a glass display face plate in order to impart high levels of impact resistance and crack resistance. Moreover, antiglare property is imparted to the image display devices of car navigation devices in order to deal with the problem that light from the outside is incident on the screen, this light is reflected, and it is difficult to see the displayed image. The antiglare property is imparted by pasting an antiglare hard coat laminated film on the surface of the plastic display face plate, forming an antiglare hard coat on the surface of the shatterproof film, or the like.

As antiglare hard coat laminated films, a number of films have been proposed (see, for example, Patent Literature 1). However, the abrasion resistance is insufficient when it is taken into consideration that a touch panel is mounted on the car navigation device.

Hence, there is a demand for an antiglare hard coat laminated film capable of maintaining surface properties such as finger slipperiness even when being repeatedly wiped with a handkerchief and the like.

### CITATION LIST

### PATENT LITERATURE

PATENT LITERATURE 1: JP-A-2010-211150

### SUMMARY OF INVENTION

### TECHNICAL PROBLEM

A first object of the present invention is to provide a novel antiglare hard coat laminated film exhibiting excellent antiglare property.

Another object of the present invention is to provide an antiglare hard coat laminated film exhibiting excellent antiglare property and good abrasion resistance.

Yet another object of the present invention is to provide an antiglare hard coat laminated film which exhibits excellent antiglare property and abrasion resistance and is excellent in preferably at least one of crack resistance, surface appearance, transparency, color tone, surface hardness, or bending resistance and more preferably substantially all of these.

### SOLUTION TO PROBLEM

The aspects of the present invention for solving the above-mentioned problems are as follows.
[1]. A hard coat laminated film sequentially comprising a first hard coat and a transparent resin film layer from a surface layer side, wherein
   the first hard coat is formed from a coating material comprising:
   100 parts by mass of (A) a copolymer of (a1) a polyfunctional (meth)acrylate and (a2) a polyfunctional thiol;
   0.01 to 7 parts by mass of (B) a water repellent; and
   0.1 to 10 parts by mass of (C) fine resin particles having an average particle diameter of 0.5 to 10 µm, and
   the coating material containing no inorganic particles.
[2]. A hard coat laminated film sequentially comprising a first hard coat and a transparent resin film layer from a surface layer side, wherein
   the first hard coat is formed from a coating material comprising:
   (A) a copolymer of (a1) a polyfunctional (meth)acrylate and (a2) a polyfunctional thiol;
   (B) a water repellent; and
   (C) fine resin particles having an average particle diameter of 0.5 to 10 µm, and
      the coating material containing no inorganic particles, and
      the hard coat laminated film satisfies the following properties (i) to (iii):
      (i) no scratches are found when the hard coat laminated film is placed on a Gakushin-type tester in accordance with JIS L0849:2013 so that the first hard coat is on the surface side; a steel wool of #0000 is subsequently attached to a rubbing finger of the Gakushin-type tester and a load of 500 g is then applied; and, after 100 reciprocating rubbings of the surface of the first hard coat under conditions that the moving speed of the rubbing finger is 300 mm/min and the moving distance is 30 mm, the rubbed portion is visually observed;
      (ii) a total light transmittance is 85% or more; and
      (iii) a Y value of an XYZ color system based on a 2-degree field of view is 1.5 to 4.2%.
[3]. The hard coat laminated film according to [1] or [2], sequentially comprising a first hard coat, a third hard coat, and a transparent resin film layer from a surface layer side, wherein the third hard coat is formed from a coating material containing inorganic particles.
[4]. The hard coat laminated film according to any one of [1] to [3], wherein a sulfur content in (A) the copolymer is 0.1 to 12% by mass.
[5]. The hard coat laminated film according to any one of [1] to [4], wherein a mass average molecular weight of (A) the copolymer in terms of polystyrene determined from a differential molecular weight distribution curve measured by gel permeation chromatography using tetrahydrofuran as a mobile phase is 5,000 to 200,000.
[6]. The hard coat laminated film according to any one of [1] to [5], wherein (B) the water repellent contains a (meth)acryloyl group-containing fluorine-based water repellent.
[7]. An article comprising the hard coat laminated film according to any one of [1] to [6].

### ADVANTAGEOUS EFFECTS OF INVENTION

An antiglare hard coat laminated film of the present invention exhibits excellent antiglare property and good abrasion resistance. A preferred antiglare hard coat laminated film of the present invention is excellent in substantially all of antiglare property, abrasion resistance, crack resistance, surface appearance, transparency, color tone, surface hardness, and bending resistance. For this reason, this antiglare hard coat laminated film can be suitably used as an article or a member of an article, for example, image display devices (including image display devices having a touch panel function and image display devices not having a touch panel function) such as liquid crystal displays, plasma displays, and electroluminescent displays; members such as display face plates and housings thereof; and particularly members of devices having a touch panel function such as a car navigation device, which are often used in the environment in which light from the outside is incident on the screen.

### BRIEF DESCRIPTION OF DRAWINGS

FIG. 1 is a GPC curve of a component (A-1) used in Examples.
FIG. 2 is a cross-sectional view illustrating an example of the antiglare hard coat laminated film of the present invention.
FIG. 3 is a diagram for explaining a radius of curvature.
FIG. 4 is a conceptual view of a film forming apparatus used in Examples.
FIG. 5 is a conceptual view of an ultraviolet irradiation apparatus used in Examples.

### DESCRIPTION OF EMBODIMENTS

In the present specification, the term "resin" is used as a term including resin mixtures containing two or more kinds of resins and resin compositions containing components other than resins as well. In the present specification, the term "film" is used interchangeably or intersubstitutably with "sheet". In addition, in the present specification, sequentially laminating one layer on another layer includes both laminating those layers directly and laminating those layers with one or more other layers such as an anchor coat interposed therebetween. In the present specification, the terms "film" and "sheet" are used for those that can be industrially wound in a roll shape. The term "plate" is used for those that can not be industrially wound in a roll shape.

The term "or more" relating to a numerical range is used in the meaning of a certain numerical value or more than the certain numerical value. For example, 20% or more means 20% or more than 20%. In the present specification, the term "or less" relating to a numerical range is used in the meaning of a certain numerical value or less than the certain numerical value. For example, 20% or less means 20% or less than 20%. Furthermore, the symbol "to" relating to a numerical range is used in the meaning of a certain numerical value, more than the certain numerical value and less than another certain numerical value, or the other certain numerical value. Here, another certain numerical value is a numerical value greater than a certain numerical value. For example, 10 to 90% means 10%, more than 10% and less than 90%, or 90%.

All numerical values used in the present specification and claims should be construed as being modified by the term "about" in the description other than Examples or unless otherwise specified. Without intending to limit the application of the doctrine of equivalents with respect to the claims, the respective numerical values should be interpreted in view of significant digits and by applying conventional rounding techniques.

The hard coat laminated film of the present invention sequentially has a first hard coat and a transparent resin film layer from the surface layer side.

Here, the "surface layer side" means to be closer to the outer surface (display surface in the case of being used in an image display device) when an article formed from a hard coat laminated film having a multilayer structure is subjected to field use.

### First hard coat

The first hard coat usually forms the surface of the antiglare hard coat laminated film of the present invention. The first hard coat usually forms a touch surface in a case where the antiglare hard coat laminated film of the present invention is used as a display face plate of an image display device having a touch panel function. The first hard coat exerts good abrasion resistance as well as good antiglare property and acts so that the antiglare hard coat laminated film is not damaged even if it is repeatedly rubbed with steel wool and the like.

The first hard coat is formed from a coating material which contains (A) a copolymer of (a1) a polyfunctional (meth)acrylate and (a2) a polyfunctional thiol (compound having two or more thiol groups in one molecule), (B) a water repellent, and (C) fine resin particles having an average particle diameter of 0.5 to 10 µm but does not contain inorganic particles.

The first hard coat is preferably formed from a coating material which contains 100 parts by mass of (A) a copolymer of (a1) a polyfunctional (meth)acrylate and (a2) a polyfunctional thiol, 0.01 to 7 parts by mass of (B) a water repellent, and (C) 0.1 to 10 parts by mass of fine resin particles having an average particle diameter of 0.5 to 10 µm, but does not contain inorganic particles.

Inorganic particles (for example, silica (silicon dioxide); metal oxide particles such as aluminum oxide, zirconia, titania, zinc oxide, germanium oxide, indium oxide, tin oxide, indium tin oxide, antimony oxide, and cerium oxide; metal fluoride particles such as magnesium fluoride and sodium fluoride; metal sulfide particles; metal nitride particles; and metal particles) are greatly effective in enhancement of the hardness of the hard coat. In addition, inorganic particles having an appropriate average particle diameter are also useful from the viewpoint of imparting antiglare property. On the other hand, the interaction of inorganic particles with a resin component such as the copolymer of component (A) is weak, and this causes insufficient abrasion resistance. Hence, in the present invention, the first hard coat does not contain inorganic particles, and fine resin particles are used in order to impart antiglare property.

Here, "not to contain" inorganic particles means not to contain inorganic particles in a significant amount from the viewpoint of enhancing the hardness of hard coat. In the field of coating materials for hard coat formation, the significant amount of inorganic particles from the above viewpoint is usually about 1 part by mass or more with respect to 100 parts by mass of the copolymer of component (A). Consequently, "not to contain" inorganic particles can also be rephrased as the amount of inorganic particles is usually 0 part by mass or more and less than 1 part by mass, preferably 0.5 parts by mass or less, more preferably 0.1 part by mass or less, and still more preferably 0.01 part by mass or less with respect to 100 parts by mass of the copolymer of component (A).

### (A) Copolymer of (a1) polyfunctional (meth)acrylate and (a2) polyfunctional thiol

The copolymer of component (A) is formed from (a1) a polyfunctional (meth)acrylate and (a2) a polyfunctional thiol. Component (A) is usually a copolymer having a highly branched structure, a so-called dendrimer structure since both of components (a1) and (a2) are polyfunctional monomers. Incidentally, in the present specification, a (meth)acrylate means an acrylate or a methacrylate. The copolymer of component (A) acts to form a hard coat by being polymerized and cured by active energy rays such as ultraviolet rays and electron beams.

### (a1) Polyfunctional (meth)acrylate

The polyfunctional (meth)acrylate of component (a1) is a (meth)acrylate having two or more (meth)acryloyl groups in one molecule. The number of (meth)acryloyl groups in one molecule of component (a1) is preferably 3 or more, more preferably 4 or more, and still more preferably 5 or more from the viewpoint of forming the structure of the copolymer of component (A) into a so-called dendrimer structure. On the other hand, the number of (meth)acryloyl groups in one molecule may be usually 20 or less and preferably 12 or less from the viewpoint of crack resistance.

According to one embodiment, examples of the polyfunctional (meth)acrylate of component (a1) include (meth)acryloyl group-containing bifunctional reactive monomers such as diethylene glycol di(meth)acrylate, neopentyl glycol di(meth)acrylate, 1,6-hexanediol di(meth)acrylate, polyethylene glycol di(meth)acrylate, 2,2'-bis(4-(meth)acryloyloxypolyethyleneoxyphenyl)propane, and 2,2'-bis(4-(meth)acryloyloxypolypropyleneoxyphenyl)propane; (meth)acryloyl group-containing trifunctional reactive monomers such as trimethylolpropane tri(meth)acrylate, trimethylolethane tri(meth)acrylate, and ethoxylated trimethylolpropane tri(meth)acrylate; (meth)acryloyl group-containing tetrafunctional reactive monomers such as ditrimethylolpropane tetra(meth)acrylate and pentaerythritol tetramethacrylate; (meth)acryloyl group-containing hexafunctional reactive monomers such as dipentaerythritol hexaacrylate; (meth)acryloyl group-containing octafunctional reactive monomers such as tripentaerythritol octaacrylate; and polymers (oligomers and prepolymers) containing one or more kinds of these as constituent monomers.

According to one embodiment, examples of the polyfunctional (meth)acrylate of component (a1) include those having two or more (meth)acryloyl groups in one molecule, which are prepolymers or oligomers such as polyurethane (meth)acrylate, polyester (meth)acrylate, polyacrylic (meth)acrylate, polyepoxy (meth)acrylate, polyalkylene glycol poly(meth)acrylate, and polyether (meth)acrylate.

As the polyfunctional (meth)acrylate of component (a1), one kind of these or a mixture of two or more kinds of these can be used.

### (a2) Polyfunctional thiol

The polyfunctional thiol of component (a2) is a compound having two or more thiol groups in one molecule. The number of thiol groups in one molecule of component (a2) may be preferably 3 or more and more preferably 4 or more from the viewpoint of forming the structure of the copolymer of component (A) into a so-called dendrimer structure. On the other hand, the number of thiol groups in one molecule may be usually 20 or less and preferably 12 or less from the viewpoint of crack resistance of the hard coat laminated film. The thiol group in the polyfunctional thiol of component (a2) may be preferably a secondary thiol group from the viewpoint of good balance between reactivity and handleability.

The polyfunctional thiol of component (a2) may be one having one or two or more polymerizable functional groups other than thiol groups such as a (meth)acryloyl group, a vinyl group, an epoxy group, and an isocyanate group in one molecule. In the present specification, a compound having two or more thiol groups and two or more (meth)acryloyl groups in one molecule is component (a2) but is not component (a1).

Examples of the polyfunctional thiol of component (a2) include compounds having two thiol groups in one molecule such as 1,2-ethanedithiol, ethylene glycol bis(3-mercaptopropionate), diethylene glycol bis(3-mercaptopropionate), 1,4-bis(3-mercaptobutyryloxy)butane, and tetraethylene glycol bis(3-mercaptopropionate); compounds having three thiol groups in one molecule such as 1,3,5-tris(3-mercaptobutyryloxyethyl)-1,3,5-triazine-2,4,6(1H,3H,5H)-trione, trimethylolpropane tris(3-mercaptobutyrate), trimethylolethane tris(3-mercaptobutyrate), and tris[(3-mercaptopropionyloxy)ethyl] isocyanurate; compounds having four thiol groups in one molecule such as pentaerythritol tetrakis(3-mercaptopropionate) and pentaerythritol tetrakis(3-mercaptobutyrate); compounds having six thiol groups in one molecule such as dipentaerythritol hexakis(3-mercaptopropionate); and polymers (oligomers and prepolymers) containing one or more kinds of these as constituent monomers. As the polyfunctional thiol of component (a2), one kind of these or a mixture of two or more kinds of these can be used.

The copolymer of component (A) may be comprised of a structural unit derived from a monomer copolymerizable with component (a1) and component (a2) in addition to these components to the extent to which the object of the present invention is not impaired. The copolymerizable monomer is usually a compound having a carbon-carbon double bond and is typically a compound having an ethylenic double bond.

The content of the structural unit derived from the polyfunctional (meth)acrylate of component (a1) in the copolymer of component (A) (hereinafter abbreviated as the (a1) content in some cases) may be usually 50% by mole or more, preferably 60% by mole or more, more preferably 70% by mole or more, and still more preferably 80% by mole or more with respect to 100% by mole of the sum of the structural units derived from the polymerizable monomers from the viewpoint of forming the structure of the copolymer of component (A) into a so-called dendrimer structure and from a further viewpoint of the abrasion resistance of the hard coat laminated film to be formed. On the other hand, the (a1) content may be usually 99% by mole or less, preferably 97% by mole or less, more preferably 95% by mole or less, and still more preferably 93% by mole or less from the viewpoint of forming the structure of the copolymer of component (A) into a so-called dendrimer structure and from the viewpoint of the crack resistance and handling property of the hard coat laminated film to be formed.

According to one embodiment, the (a1) content may be usually 50% by mole or more and 99% by mole or less, preferably 50% by mole or more and 97% by mole or less, 50% by mole or more and 95% by mole or less, 50% by mole or more and 93% by mole or less, 60% by mole or more and 99% by mole or less, 60% by mole or more and 97% by mole or less, 60% by mole or more and 95% by mole or less, 60% by mole or more and 93% by mole or less, 70% by mole or more and 99% by mole or less, 70% by mole or more and 97% by mole or less, 70% by mole or more and 95% by mole or less, 70% by mole or more and 93% by mole or less, 80% by mole or more and 99% by mole or less, 80% by mole or more and 97% by mole or less, 80% by mole or more and 95% by mole or less, or 80% by mole or more and 93% by mole or less with respect to 100% by mole of the sum of the structural units derived from the polymerizable monomers.

The content of the structural unit derived from the polyfunctional thiol of component (a2) in the copolymer of component (A) (hereinafter abbreviated as the (a2) content in some cases) may be usually 1% by mole or more, preferably 3% by mole or more, more preferably 5% by mole or more, and still more preferably 7% by mole or more with respect to 100% by mole of the sum of the structural units derived from the polymerizable monomers from the viewpoint of forming the structure of the copolymer of component (A) into a so-called dendrimer structure and from further viewpoint of the crack resistance and handling property of the hard coat laminated film to be formed. On the other hand, the (a2) content may be usually 50% by mole or less, preferably 40% by mole or less, more preferably 30% by mole or less, and still more preferably 20% by mole or less from the viewpoint of forming the structure of the copolymer of component (A) into a so-called dendrimer structure and from the viewpoint of the abrasion resistance of the hard coat laminated film to be formed.

According to one embodiment, the (a2) content may be usually 1% by mole or more and 50% by mole or less, preferably 1% by mole or more and 40% by mole or less, 1% by mole or more and 30% by mole or less, 1% by mole or more and 20% by mole or less, 3% by mole or more and 50% by mole or less, 3% by mole or more and 40% by mole or less, 3% by mole or more and 30% by mole or less, 3% by mole or more and 20% by mole or less, 5% by mole or more and 50% by mole or less, 5% by mole or more and 40% by mole or less, 5% by mole or more and 30% by mole or less, 5% by mole or more and 20% by mole or less, 7% by mole or more and 50% by mole or less, 7% by mole or more and 40% by mole or less, 7% by mole or more and 30% by mole or less, or 7% by mole or more and 20% by mole or less with respect to 100% by mole of the sum of the structural units derived from the polymerizable monomers.

Here, the sum of the (a1) content and the (a2) content may be usually 80% by mole or more, preferably 90% by mole or more, more preferably 95% by mole or more, and still more preferably 99% by mole or more, or 100% by mole or less with respect to 100% by mole of the sum of the structural units derived from the polymerizable monomers.

In this connetion, the "polymerizable monomers" mean the polyfunctional (meth)acrylate of component (a1), the polyfunctional thiol of component (a2), and a monomer copolymerizable with these. The copolymerizable monomer is usually a compound having a carbon-carbon double bond and is typically a compound having an ethylenic double bond.

The sulfur content in the copolymer of component (A) may be usually 0.1 to 12% by mass, preferably 0.5 to 10% by mass, more preferably 1 to 7% by mass, and still more preferably 1.5 to 5% by mass from the viewpoint of controlling the (a2) content to fall within the preferred range.

According to one embodiment, the sulfur content may be 0.1 to 10% by mass, 0.1 to 7% by mass, 0.1 to 5% by mass, 0.5 to 12% by mass, 0.5 to 7% by mass, 0.5 to 5% by mass, 1 to 12% by mass, 1 to 10% by mass, 1 to 5% by mass, 1.5 to 12% by mass, 1.5 to 10% by mass, or 1.5 to 7% by mass.

Here, the sulfur content is a value measured by atomic absorption spectrophotometry. Specifically, the sulfur content is a value measured by atomic absorption spectrophotometry for a measurement sample obtained by performing ashing (wet decomposition) of a sample using a mixed acid of nitric acid and hydrochloric acid (volume ratio 8 : 2) with a microwave apparatus, then adding an aqueous solution of hydrochloric acid to the ash, filtering the mixture, and adjusting the volume of the filtrate with purified water. At this time, yttrium was used as an internal standard. In addition, it should be noted that sulfur is likely to bond with iron and the like and thus to generate a precipitate and this is required to be prevented. More specifically, the measurement of the sulfur content by atomic absorption spectrophotometry was performed according to the following procedure.

### (1) Pretreatment of sample

The copolymer of component (A) was applied on a biaxially stretched polyethylene terephthalate resin film which had a thickness of 50 µm and was subjected to an easy release treatment using an applicator so that the thickness thereof after being dried became 2 µm and dried at a temperature of 100°C for 1 hour to obtain a coat. In a polytetrafluoroethylene ashing vessel "XP-1500 plus control" (trade name) of a type capable of measuring the temperature and pressure manufactured by CEM Corporation, 0.2 g of a sample collected from the coat was placed, 5 mL of a mixed acid of nitric acid 1.42 for the reagent for precision analysis (UGR) manufactured by KANTO CHEMICAL CO., INC. and hydrochloric acid for atomic absorption analysis manufactured by KANTO CHEMICAL CO., INC. at a volume ratio of 8 : 2 was added into the vessel, these were mixed together, the mixture was left to stand still at normal temperature for 12 hours, and then set in a microwave apparatus "MARS 5" (trade name) manufactured by CEM Corporation, and the first heat treatment was performed. After completion of the treatment, the polytetrafluoroethylene ashing vessel was left to stand until the internal temperature thereof reached normal temperature, and then the first degassing was performed. The polytetrafluoroethylene ashing vessel was again set in the microwave apparatus, and the second heat treatment was performed. After completion of the treatment, the polytetrafluoroethylene ashing vessel was left to stand until the internal temperature thereof reached normal temperature, and then the second degassing was performed. Incidentally, the first heat treatment was performed under the conditions that the pressure and temperature were raised to a pressure of 40 PSI and a temperature of 130°C at an output of 400 W over 10 minutes and held for 3 minutes, then the pressure and temperature were raised to a pressure of 60 PSI and a temperature of 150°C at an output of 400 W over 10 minutes and held for 5 minutes, then the pressure and temperature were raised to a pressure of 100 PSI and a temperature of 160°C at an output of 400 W over 10 minutes and held for 5 minutes, then the pressure and temperature were raised to a pressure of 250 PSI and a temperature of 180°C at an output of 400 W over 10 minutes and held for 3 minutes, and then the pressure and temperature were raised to a pressure of 550 PSI and a temperature of 200°C at an output of 400 W over 10 minutes and held for 7 minutes. The second heat treatment was performed under the conditions that the pressure and temperature were raised a pressure of 600 PSI and a temperature of 230°C at an output of 400 W over 20 minutes and held for 10 minutes. Subsequently, 10 mL of an aqueous solution of hydrochloric acid composed of hydrochloric acid for atomic absorption analysis manufactured by KANTO CHEMICAL CO., INC. and purified water at a volume ratio of 1 : 1 was added into the vessel, these were mixed together, the mixture was left to stand still at normal temperature for 6 hours, and then filtered using filter paper "Quantitative Filter Paper No. 5A" (trade name) manufactured by Advantec Toyo Kaisha., Ltd., and the volume of the filtrate was adjusted to 50 mL with purified water to obtain a treated sample. At this time, an yttrium standard solution for atomic absorption analysis manufactured by Fujifilm Wako Pure Chemical Corporation was added as an internal standard so that the yttrium concentration in the treated sample was 0.02 ppm.

### (2) Atomic absorption analysis

Using the measurement sample prepared by diluting the pretreated sample obtained in (1) above with purified water 100-fold and an ICP-OES apparatus "ARCOS" (trade name) manufactured by SPECTRO Analytical Instruments GmbH, the atomic absorbance was measured under the conditions of a plasma power of 1400 W, a plasma gas flow rate of 13.0 liters/minute, an auxiliary gas flow rate of 1.0 liters/minute, a nebulizer gas flow rate of 0.8 liters/minute, a torch position of 3.0 mm, and a measurement wavelength of 180.731 nm. The sulfur content was determined based on a calibration curve created by the following method (3). The analysis program used was "Smart Analyzer Vision Software" (trade name) developed by SPCTRO Analytical Instruments GmbH. Incidentally, it should be noted that the dilution degree of the pretreated sample obtained in (1) above with purified water is required to be appropriately controlled so that the measured value of the measurement sample is interpolated to the plots of the calibration curve.

### (3) Creation of calibration curve

### (3-1) Preparation of sample for calibration curve

To a predetermined amount (1, 2, 5, 10, or 20 mL) of a sulfur standard solution for ICP atomic emission spectrophotometry (sulfur concentration: 1000 mg/liter) manufactured by KANTO CHEMICAL CO., INC., 10 mL of an aqueous solution of hydrochloric acid composed of hydrochloric acid for atomic absorption analysis manufactured by KANTO CHEMICAL CO., INC. and purified water at a volume ratio of 1 : 1 was added, and the volume of the mixture was adjusted to 50 mL with purified water to obtain a sample for calibration curve. At this time, an yttrium standard solution for atomic absorption analysis manufactured by Fujifilm Wako Pure Chemical Corporation was added thereto as an internal standard so that the yttrium concentration in the sample for calibration curve was 0.02 ppm.

### (3-2) Atomic absorption analysis

The atomic absorbance was measured in the same manner as in (2) above using the sample for calibration curve obtained in (3-1) above.

### (3-3) Creation of calibration curve

The calibration curve was created by the least squares method from the relation between the sulfur concentration in the sample for calibration curve and the atomic absorbance of the sample for calibration curve.

The mass average molecular weight (Mw) of the copolymer of component (A) in terms of polystyrene determined from the differential molecular weight distribution curve (hereinafter abbreviated as GPC curve in some cases) measured by gel permeation chromatography (hereinafter abbreviated as GPC in some cases) using tetrahydrofuran as the mobile phase may be preferably 5,000 or more, more preferably 8,000 or more, and still more preferably 10,000 or more from the viewpoint of good balance between the abrasion resistance and crack resistance of the hard coat laminated film to be formed. On the other hand, this mass average molecular weight (Mw) may be preferably 200,000 or less, more preferably 100,000 or less, and still more preferably 50,000 or less from the viewpoint of the coating property of the coating material containing the copolymer of component (A).

According to one embodiment, the mass average molecular weight (Mw) of the copolymer of component (A) may be preferably 5,000 or more and 200,000 or less and more preferably 5,000 or more and 100,000 or less, 5,000 or more and 50,000 or less, 8,000 or more and 200,000 or less, 8,000 or more and 100,000 or less, 8,000 or more and 50,000 or less, 10,000 or more and 200,000 or less, 10,000 or more and 100,000 or less, or 10,000 or more and 50,000 or less.

The Z average molecular weight (Mz) of the copolymer of component (A) in terms of polystyrene determined from the GPC curve using tetrahydrofuran as the mobile phase may be preferably 5,000 or more, more preferably 10,000 or more, and still more preferably 30,000 or more from the viewpoint of good balance between the abrasion resistance and crack resistance of the hard coat laminated film to be formed. On the other hand, this Z average molecular weight (Mz) may be preferably 200,000 or less, more preferably 150,000 or less, and still more preferably 120,000 or less from the viewpoint of coating property of the coating material containing the copolymer of component (A).

According to one embodiment, the Z average molecular weight (Mz) of the copolymer of component (A) may be preferably 5,000 or more and 200,000 or less and more preferably 5,000 or more and 150,000 or less, 5,000 or more and 120,000 or less, 10,000 or more and 200,000 or less, 10,000 or more and 150,000 or less, 10,000 or more and 120,000 or less, 30,000 or more and 200,000 or less, 30,000 or more and 150,000 or less, or 30,000 or more and 120,000 or less.

The measurement of GPC can be performed using a high performance liquid chromatography system "HLC-8320" (trade name) (i.e. a system including a degasser, a liquid pump, an autosampler, a column oven, and an RI (differential refractive index) detector) manufactured by Tosoh Corporation as a measurement system; two Shodex GPC columns "KF-806L" (trade name), one Shodex GPC column "KF-802" (trade name), and one Shodex GPC column "KF-801" (trade name) for a total of four by being connected in the order of KF-806L, KF-806L, KF-802, and KF-801 from the upstream side as GPC columns; and tetrahydrofuran (not containing stabilizer) for high performance liquid chromatography manufactured by Fujifilm Wako Pure Chemical Corporation as a mobile phase; under conditions of a flow rate of 1.0 ml/min, a column temperature of 40°C, a sample concentration of 1 mg/ml, and a sample injection volume of 100 microliters. The elution amount at each retention volume can be determined from the amount detected by the RI detector on the assumption that there is no molecular weight dependency of the refractive index of the measurement sample. In addition, the calibration curve from retention volume to molecular weight in terms of polystyrene can be created using standard polystyrene "EasiCal PS-1" (trade name) (Plain A molecular weights 6375000, 573000, 117000, 31500, and 3480; Plain B molecular weights 2517000, 270600, 71800, 10750, and 705) manufactured by Agilent Technology, Inc. As the analysis program, "TOSOH HLC-8320 GPC EcoSEC" (trade name) developed by Tosoh Corporation can be used. Incidentally, for further information on the GPC theory and actual measurement, reference books such as "Size Exclusion Chromatography, high performance Liquid Chromatography of Polymers, author: MORI Sadao, First Edition, December 10, 1991" published by Kyoritsu Shuppan Co., Ltd. can be made reference to.

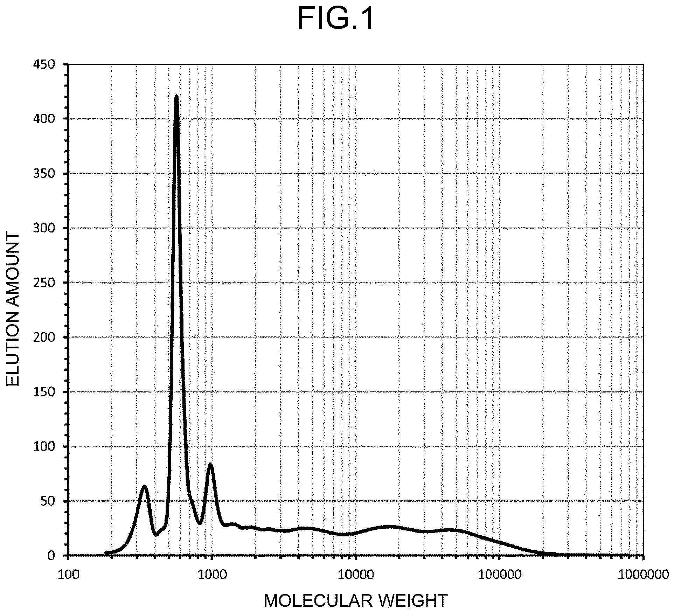

The differential molecular weight distribution curve of a copolymer (A-1) described later, which was used in Examples, is illustrated in FIG. 1. Three clear peaks are seen in the relatively low molecular weight region, and the molecular weights in terms of polystyrene at these peak top positions are 340, 570, and 970 in this order from the low molecular weight side. Also, a plurality of overlapping and broad peaks are seen on the high molecular weight side of these three peaks. The molecular weight of this component on the highest molecular weight side in terms of polystyrene is found to be around 200,000. Further, the entire mass average molecular weight is 12,000, the entire number average molecular weight is 940, and the entire Z average molecular weight is 73,000.

### (B) Water repellent

The water repellent of component (B) acts to enhance the abrasion resistance, finger slipperiness, anti-stain property (antifouling property), and stain wiping property of the hard coat laminated film to be formed.

Examples of the water repellent include wax-based water repellents such as paraffin wax, polyethylene wax, and acrylic-ethylene copolymer wax; silicone-based water repellents such as silicone oil, silicone resins, polydimethylsiloxane, and alkyl alkoxysilanes; and fluorine-containing water repellents such as fluoropolyether-based water repellents and fluoropolyalkyl-based water repellents.

Among these, as the water repellent of component (B), a fluorine-containing water repellent is preferable from viewpoint of the abrasion resistance and water repellent performance of the hard coat laminated film to be formed. As the water repellent of component (B), a fluorine-containing water repellent containing a (meth)acryloyl group (hereinafter referred to as "(meth)acryloyl group-containing fluorine-based water repellent") is more preferable from the viewpoint of the abrasion resistance and water repellent performance of the hard coat laminated film to be formed and from the viewpoint of preventing the troubles that component (B) bleeds out by allowing component (B) to chemically bond or strongly interact with the copolymer of component (A). Here, the (meth)acryloyl group-containing fluorine-based water repellent is a compound having one or more (meth)acryloyl groups in the molecule and one or more, preferably three or more, more preferably five or more fluorine-carbon bonds (typically, a structure in which one or two or more hydrogen atoms of an organic functional group such as a hydrocarbon group are substituted with a fluorine atom) in the molecule.

Examples of the (meth)acryloyl group-containing fluorine-based water repellent include a (meth)acryloyl group-containing fluoroether-based water repellent, a (meth)acryloyl group-containing fluoroalkyl-based water repellent, a (meth)acryloyl group-containing fluoroalkenyl-based water repellent, a (meth)acryloyl group-containing fluoropolyether-based water repellent, a (meth)acryloyl group-containing fluoropolyalkyl-based water repellent, and a (meth)acryloyl group-containing fluoropolyalkenyl-based water repellent.

As the water repellent of component (B), a water repellent containing a compound having a (meth)acryloyl group and a fluoropolyether group in the molecule (hereafter, abbreviated as a (meth)acryloyl group-containing fluoropolyether-based water repellent) is still more preferable. As the water repellent of component (B), a mixture of an acryloyl group-containing fluoropolyether-based water repellent and a methacryloyl group-containing fluoropolyether-based water repellent is most preferable from the viewpoint of exerting good abrasion resistance, water repellency, and bleed-out preventing property while keeping high transparency of the hard coat laminated film to be formed by appropriately controlling the chemical bond or interaction between component (B) and the copolymer of component (A).

As the water repellent of component (B), one kind of these or a mixture of two or more kinds of these can be used.

The (meth)acryloyl group-containing fluorine-based water repellent is clearly distinguished from the polyfunctional (meth)acrylate of component (a1) in that it has one or more fluorine-carbon bonds in the molecule. In the present specification, a compound having two or more (meth)acryloyl groups in one molecule and one or more fluorine-carbon bonds in the molecule is classified into component (B).

The (meth)acryloyl group-containing fluoropolyether-based water repellent is clearly distinguished from the polyfunctional (meth)acrylate of component (a1) in that it has a fluoropolyether group in the molecule. In the present specification, a compound having two or more (meth)acryloyl groups in one molecule and a fluoropolyether group is classified into component (B).

The amount of the water repellent of component (B) blended can be appropriately determined from the viewpoint of achieving sufficient abrasion resistance of the hard coat laminated film to be formed, particularly improvement in the property (i) (steel wool resistance).

The amount of the water repellent of component (B) blended in the coating material for forming the first hard coat may be usually 0.01 part by mass or more, preferably 0.02 parts by mass or more, and more preferably 0.03 parts by mass or more, still more preferably 0.05 parts by mass or more, yet more preferably 0.1 part by mass or more, and yet still more preferably 0.3 parts by mass or more with respect to 100 parts by mass of the copolymer of component (A) from the viewpoint of attaining the effect by component (B). On the other hand, this blended amount may be usually 7 parts by mass or less, preferably 4 parts by mass or less, and more preferably 2 parts by mass or less from the viewpoint of preventing the troubles that component (B) bleeds out, or the like.

The amount of the water repellent of component (B) blended may be usually 0.01 part by mass or more and 7 parts by mass or less, preferably 0.01 part by mass or more and 4 parts by mass or less, 0.01 part by mass or more and 2 parts by mass or less, 0.02 parts by mass or more and 7 parts by mass or less, 0.02 parts by mass or more and 4 parts by mass or less, 0.02 parts by mass or more and 2 parts by mass or less, 0.03 parts by mass or more and 7 parts by mass or less, 0.03 parts by mass or more and 4 parts by mass or less, 0.03 parts by mass or more and 2 parts by mass or less, 0.05 parts by mass or more and 7 parts by mass or less, 0.05 parts by mass or more and 4 parts by mass or less, 0.05 parts by mass or more and 2 parts by mass or less, 0.1 part by mass or more and 7 parts by mass or less, 0.1 part by mass or more and 4 parts by mass or less, 0.1 part by mass or more and 2 parts by mass or less, 0.3 parts by mass or more and 7 parts by mass or less, 0.3 parts by mass or more and 4 parts by mass or less, or 0.3 parts by mass or more and 2 parts by mass or less.

### (C) Fine resin particles having average particle diameter of 0.5 to 10 µm

The fine resin particles of component (C) act to impart antiglare property to the antiglare hard coat laminated film of the present invention, by which the displayed image is visible even if light from the outside is incident on the screen of the image display device and is reflected.

Examples of the fine resin particles include fine resin particles of a silicone-based resin, a styrene-based resin, an acrylic resin, a fluorine-based resin, a polycarbonate-based resin, an ethylene-based resin, a cured resin of an amino-based compound and formaldehyde, and the like. Among these, fine particles of a silicone-based resin, an acrylic resin, and a fluorine-based resin are preferable from the viewpoint of low specific gravity, lubricity, dispersibility, and solvent resistance. Also, fine resin particles having a truly spherical shape are preferable from the viewpoint of improving the light diffusion property. As the fine resin particles, one kind of these or a mixture of two or more kinds of these can be used.

The average particle diameter of the fine resin particles of component (C) is usually 0.5 µm or more and preferably 1 µm or more from the viewpoint of reliably attaining antiglare property of the hard coat laminated film. On the other hand, the average particle diameter is usually 10 µm or less and preferably 6 µm or less from the viewpoint of keeping transparency of the hard coat laminated film.

According to one embodiment, the average particle diameter of the fine resin particles of component (C) may be usually 0.5 µm or more and 10 µm or less and preferably 0.5 µm or more and 6 µm or less, 1 µm or more and 10 µm or less, or 1 µm or more and 6 µm or less.

In the present specification, the average particle diameter of the fine resin particles is a particle diameter at which the cumulation from the smaller particle side is 50% by mass in the particle diameter distribution curve measured by the laser diffraction/scattering method. The average particle diameter of the fine resin particles can be calculated as a particle diameter at which the cumulation from the smaller particle side is 50% by mass in the particle diameter distribution curve measured using a laser diffraction/scattering particle size analyzer "MT3200 II" (trade name) manufactured by Nikkiso Co., Ltd.

The amount of the fine resin particles of component (C) blended may vary depending on the level of antiglare property to be imparted, but it can be appropriately determined from the viewpoint of controlling the Y value of an XYZ color system based on a 2-degree field of view of the property (iii) to fall within a suitable range.

The amount of the fine resin particles of component (C) blended may vary depending on the level of antiglare property to be imparted, but it may be usually 0.1 to 10 parts by mass, preferably 0.2 to 5 parts by mass, and more preferably 0.3 to 3 parts by mass with respect to 100 parts by mass of the copolymer of component (A). Also, the amount of the fine resin particles of component (C) blended may be preferably 0.5 to 3 parts by mass from the viewpoint of abrasion resistance and transparency of the hard coat laminated film.

According to one embodiment, the amount of the fine resin particles of component (C) blended may be 0.1 to 5 parts by mass, 0.1 to 3 parts by mass, 0.2 to 10 parts by mass, 0.2 to 3 parts by mass, 0.3 to 10 parts by mass, 0.3 to 5 parts by mass, 0.5 to 10 parts by mass, or 0.5 to 5 parts by mass with respect to 100 parts by mass of the copolymer of component (A).

It is preferable that the coating material for forming the first hard coat further contains a compound having two or more isocyanate groups (-N=C=O) in one molecule and/or a photopolymerization initiator from the viewpoint of improving the curability thereof by active energy rays.

Examples of the compound having two or more isocyanate groups in one molecule include methylene bis-4-cyclohexyl isocyanate; polyisocyanates such as a trimethylolpropane adduct product of tolylene diisocyanate, a trimethylolpropane adduct product of hexamethylene diisocyanate, a trimethylolpropane adduct product of isophorone diisocyanate, an isocyanurate product of tolylene diisocyanate, an isocyanurate product of hexamethylene diisocyanate, an isocyanurate product of isophorone diisocyanate, and a biuret product of hexamethylene diisocyanate; and urethane cross-linking agents such as blocked type isocyanates of the polyisocyanates. As the compound having two or more isocyanate groups in one molecule, one kind of these or a mixture of two or more kinds of these can be used. In addition, at the time of crosslinking, a catalyst such as dibutyltin dilaurate or dibutyltin diethylhexoate may be added, if necessary.

Examples of the photopolymerization initiator include benzophenone-based compounds such as benzophenone, methyl-o-benzoylbenzoate, 4-methylbenzophenone, 4,4'-bis(diethylamino)benzophenone, methyl o-benzoylbenzoate, 4-phenylbenzophenone, 4-benzoyl-4'-methyldiphenyl sulfide, 3,3',4,4'-tetra(tert-butylperoxycarbonyl)benzophenone, and 2,4,6-trimethylbenzophenone; benzoin-based compounds such as benzoin, benzoin methyl ether, benzoin ethyl ether, benzoin isopropyl ether, and benzyl methyl ketal; acetophenone-based compounds such as acetophenone, 2,2-dimethoxy-2-phenylacetophenone, and 1-hydroxycyclohexyl phenyl ketone; anthraquinone-based compounds such as methyl anthraquinone, 2-ethyl anthraquinone, and 2-amyl anthraquinone; thioxanthone-based compounds such as thioxanthone, 2,4-diethylthioxanthone and 2,4-diisopropylthioxanthone; alkylphenone-based compounds such as acetophenone dimethyl ketal; triazine-based compounds; biimidazole-based compounds; acyl phosphine oxide-based compounds; titanocene-based compounds; oxime ester-based compounds; oxime phenyl acetate-based compounds; hydroxy ketone-based compounds; and aminobenzoate-based compounds. As the photopolymerization initiator, one kind of these or a mixture of two or more kinds of these can be used.

As the photopolymerization initiator, it is preferable to use two or more kinds of acetophenone-based photopolymerization initiators, for example, 1-hydroxy-cyclohexyl-phenyl ketone and 2-hydroxy-1-{4-[4-(2-hydroxy-2-methyl-propionyl)-benzyl]phenyl}-2-methyl-propan-1-one in combination. This makes it possible to sufficiently cure the coating material while suppressing the coloration of the hard coat laminated film.

The coating material for forming the first hard coat can contain one or two or more kinds of additives such as an antistatic agent, a surfactant, a leveling agent, a thixotropic agent, a fouling inhibitor, a printability improver, an antioxidant, a weather resistant stabilizer, a light resistant stabilizer, an ultraviolet absorber, a heat stabilizer, and an organic colorant, if desired.

The coating material for forming the first hard coat may contain a solvent, if desired, in order to dilute the coating material to a concentration at which coating is facilitated. The solvent is not particularly limited as long as it does not react with components (A) to (C) and other optional components or does not catalyze (promote) the self reaction (including degradation reaction) of these components. Examples of the solvent include 1-methoxy-2-propanol, ethyl acetate, n-butyl acetate, toluene, methyl ethyl ketone, methyl isobutyl ketone, diacetone alcohol, and acetone. As the solvent, one kind of these or a mixture of two or more kinds of these can be used.

The coating material for forming the first hard coat can be obtained by mixing and stirring these components.

The method for forming the first hard coat using the coating material for forming the first hard coat is not particularly limited, and a known web coating method can be used. Examples of the method include roll coating, gravure coating, reverse coating, roll brushing, dip coating, spray coating, spin coating, air knife coating, and die coating.

The thickness of the first hard coat may be usually 0.5 µm or more, preferably 1 µm or more, more preferably 1.5 µm or more, and still more preferably 1.8 µm or more from the viewpoint of satisfying the abrasion resistance of the hard coat laminated film to be formed, particularly the property (i) and from the viewpoint of the surface hardness. On the other hand, the thickness of the first hard coat may be preferably 3 times or less, more preferably 2 times or less, and still more preferably one time or less of the average particle diameter of the fine resin particles of component (C) used in the coating material for forming the first hard coat from the viewpoint of antiglare property of the hard coat laminated film. For example, in a case where the average particle diameter of the fine resin particles of component (C) used in the coating material for forming the first hard coat is 2 µm, the thickness of the first hard coat may be preferably 6 µm or less, more preferably 4 µm or less, and still more preferably 2 µm or less. In a case where the average particle diameter of the fine resin particles of component (C) used in the coating material for forming the first hard coat is 3 µm, the thickness of the first hard coat may be preferably 9 µm or less, more preferably 6 µm or less, and still more preferably 3 µm or less.

According to one embodiment, the thickness of the first hard coat may be preferably 0.5 µm or more and 3 times or less of the average particle diameter of the fine resin particles of component (C), 0.5 µm or more and 2 times or less of the average particle diameter of the fine resin particles of component (C), 0.5 µm or more and one time or less of the average particle diameter of the fine resin particles of component (C), 1 µm or more and 3 times or less of the average particle diameter of the fine resin particles of component (C), 1 µm or more and 2 times or less of the average particle diameter of the fine resin particles of component (C), 1 µm or more and one time or less of the average particle diameter of the fine resin particles of component (C), 1.5 µm or more and 3 times or less of the average particle diameter of the fine resin particles of component (C), 1.5 µm or more and 2 times or less of the average particle diameter of the fine resin particles of component (C), 1.5 µm or more and one time or less of the average particle diameter of the fine resin particles of component (C), 1.8 µm or more and 3 times or less of the average particle diameter of the fine resin particles of component (C), 1.8 µm or more and 2 times or less of the average particle diameter of the fine resin particles of component (C), or 1.8 µm or more and one time or less of the average particle diameter of the fine resin particles of component (C).

### Second hard coat

The hard coat laminated film of the present invention preferably sequentially has a first hard coat, a transparent resin film layer, and a second hard coat from the surface layer side. By forming the second hard coat, both the force to curl the hard coat laminated film to one side (hereinafter abbreviated as curling force in some cases) and the force to curl the hard coat laminated film to the other side work. The occurrence of curling can be then suppressed as these two curling forces are offset by each other to zero.

In recent years, a touch panel having a two-layer structure in which a touch sensor is directly formed on the back side of a display face plate (so-called one glass solution) has been proposed for the purpose of saving the weight of the image display device. In addition, one plastic solution which substitutes the so-called one glass solution has also been proposed for further weight saving. In a case where the hard coat laminated film of the present invention is used in one plastic solution which substitutes the so-called one glass solution, it becomes easy to impart suitable properties as a printing surface by forming the second hard coat.

The second hard coat is not particularly limited and can be formed by an any method using any coating material.

The second hard coat is preferably formed from a coating material containing (A) a copolymer of (a1) a polyfunctional (meth)acrylate and (a2) a compound having two or more thiol groups in one molecule from the viewpoint of curling resistance of the hard coat laminated film to be obtained. The second hard coat is more preferably formed from a coating material containing (A) a copolymer of (a1) a polyfunctional (meth)acrylate and (a2) a compound having two or more thiol groups in one molecule and (D) a leveling agent. The second hard coat is still more preferably formed from a coating material containing 100 parts by mass of (A) a copolymer of (a1) a polyfunctional (meth)acrylate and (a2) a compound having two or more thiol groups in one molecule and 0.01 to 10 parts by mass of (D) a leveling agent.

As the copolymer of component (A), those described above in the description of the coating material for forming the first hard coat can be used. As the copolymer of component (A), one kind of these or a mixture of two or more kinds of these can be used. As the copolymer of component (A), one the same as that used in the coating material for forming the first hard coat is still more preferable from the viewpoint of curling resistance of the hard coat laminated film to be obtained.

### (D) Leveling agent

It is preferable that the coating material for forming the second hard coat contains a leveling agent from the viewpoint of smoothing the surface of the second hard coat.

Examples of the leveling agent include an acrylic leveling agent, a silicone-based leveling agent, a fluorine-based leveling agent, a silicone-acrylic copolymer-based leveling agent, a fluorine-modified acrylic leveling agent, a fluorine-modified silicone leveling agent, and leveling agents in which functional groups (for example, alkoxy groups such as a methoxy group and an ethoxy group, an acyloxy group, a halogen group, an amino group, a vinyl group, an epoxy group, a methacryloxy group, an acryloxy group, and an isocyanate group) are introduced. Among these, as the leveling agent of component (D), an acrylic leveling agent and a silicone-acrylic copolymer-based leveling agent are preferable from the viewpoint of printability. As the leveling agent of component (D), one kind of these or a mixture of two or more kinds of these can be used.

The amount of the leveling agent of component (D) blended may be usually 0.01 part by mass or more, preferably 0.1 part by mass or more, and more preferably 0.2 parts by mass or more with respect to 100 parts by mass of the copolymer of component (A) from the viewpoint of smoothing the surface of the second hard coat. On the other hand, this blended amount may be usually 10 parts by mass or less, preferably 7 parts by mass or less, more preferably 4 parts by mass or less, and still more preferably 2 parts by mass or less from the viewpoint of preventing the troubles that the leveling agent of component (D) bleeds out.

According to one embodiment, the amount of the leveling agent of component (D) blended may be usually 0.01 part by mass or more and 10 parts by mass or less, preferably 0.01 part by mass or more and 7 parts by mass or less, 0.01 part by mass or more and 4 parts by mass or less, 0.01 part by mass or more and 2 parts by mass or less, 0.1 part by mass or more and 10 parts by mass or less, 0.1 part by mass or more and 7 parts by mass or less, 0.1 part by mass or more and 4 parts by mass or less, 0.1 part by mass or more and 2 parts by mass or less, 0.2 parts by mass or more and 10 parts by mass or less, 0.2 parts by mass or more and 7 parts by mass or less, 0.2 parts by mass or more and 4 parts by mass or less, or 0.2 parts by mass or more and 2 parts by mass or less with respect to 100 parts by mass of the copolymer of component (A).

It is preferable that the coating material for forming the second hard coat further contains a compound having two or more isocyanate groups (-N=C=O) in one molecule and/or a photopolymerization initiator from the viewpoint of improving the curability thereof by active energy rays.

As the compound having two or more isocyanate groups in one molecule, those described above in the description of the coating material for forming the first hard coat can be used. As the compound having two or more isocyanate groups in one molecule, one kind of these or a mixture of two or more kinds of these can be used.

As the photopolymerization initiator, those described above in the description of the coating material for forming the first hard coat can be used. As the photopolymerization initiator, one kind of these or a mixture of two or more kinds of these can be used.

The coating material for forming the second hard coat can contain one or two or more kinds of additives such as an antistatic agent, a surfactant, a thixotropic agent, a fouling (or stain) inhibitor, a printability improver, an antioxidant, a weather resistant stabilizer, a light resistant stabilizer, an ultraviolet absorber, a heat stabilizer, a colorant, inorganic particles, and organic particles, if desired.

The coating material for forming the second hard coat may contain a solvent, if desired, in order to dilute the coating material to a concentration at which coating is facilitated. The solvent is not particularly limited as long as it does not react with component (A), component (D), and other optional components or does not catalyze (promote) the self reaction (including degradation reaction) of these components. Examples of the solvent include 1-methoxy-2-propanol, ethyl acetate, n-butyl acetate, toluene, methyl ethyl ketone, methyl isobutyl ketone, diacetone alcohol, and acetone. As the solvent, one kind of these or a mixture of two or more kinds of these can be used.

The coating material for forming the second hard coat can be obtained by mixing and stirring these components.

The method for forming the second hard coat using the coating material for forming the second hard coat is not particularly limited, and a known web coating method can be used. Examples of the method include roll coating, gravure coating, reverse coating, roll brushing, dip coating, spray coating, spin coating, air knife coating, and die coating.

The thickness of the second hard coat is not particularly limited but may be usually 60 µm or less, preferably 30 µm or less, more preferably 25 µm or less, and still more preferably 20 µm or less from the viewpoint of bending resistance of the hard coat laminated film to be obtained. On the other hand, the thickness of the second hard coat may be usually 0.5 µm or more, preferably 1 µm or more, more preferably 1.5 µm or more, and still more preferably 1.8 µm or more from the viewpoint of suppressing the curling force of the hard coat laminated film.

According to one embodiment, the thickness of the second hard coat may be usually 0.5 µm or more and 60 µm or less, preferably 0.5 µm or more and 30 µm or less, 0.5 µm or more and 25 µm or less, 0.5 µm or more and 20 µm or less, 1 µm or more and 60 µm or less, 1 µm or more and 30 µm or less, 1 µm or more and 25 µm or less, 1 µm or more and 20 µm or less, 1.5 µm or more and 60 µm or less, 1.5 µm or more and 30 µm or less, 1.5 µm or more and 25 µm or less, 1.5 µm or more and 20 µm or less, 1.8 µm or more and 60 µm or less, 1.8 µm or more and 30 µm or less, 1.8 µm or more and 25 µm or less, or 1.8 µm or more and 20 µm or less.

Also, the thickness of the second hard coat may be the same as the thickness of the first hard coat from the viewpoint of the curling resistance of the hard coat laminated film.

Here, the "same thickness" should not be interpreted as exactly the same thickness in the physicochemically strict meaning. It should be interpreted as the same thickness within the range of fluctuation of process and quality control usually performed industrially. If the thicknesses are the same within the range of fluctuation of process and quality control usually performed industrially, the curling resistance of the hard coat laminated film can be favorably kept. The thickness of the hard coat (after being cured) is usually controlled in process and quality control in a range of about -0.5 to +0.5 µm, and thus a thickness of 9.5 µm and a thickness of 10.5 µm should be interpreted as the same, for example, when the set thickness is 10 µm. The "same thickness" herein may be rephrased as "substantially the same thickness".

### Third hard coat

The hard coat laminated film of the present invention may preferably sequentially have a first hard coat, a third hard coat, and a transparent resin film layer from the surface layer side.

The hard coat laminated film of the present invention may more preferably sequentially have a first hard coat, a third hard coat, a transparent resin film layer, and a second hard coat from the surface layer side. The surface hardness of the first hard coat can be enhanced by forming the third hard coat.

The third hard coat is not particularly limited and can be formed by any method using an any coating material. As the coating material for forming the third hard coat, a coating material containing (E) inorganic particles is preferable from the viewpoint of enhancing the surface hardness of the first hard coat. As the coating material for forming the third hard coat, a coating material containing (F) an active energy ray curable resin in addition to (E) inorganic particles is more preferable.

Here, "to contain" inorganic particles means to contain inorganic particles in a significant amount to enhance the hardness of hard coat. In the field of coating materials for hard coat formation, the significant amount of inorganic particles to enhance the hardness of hard coat is usually about 5 parts by mass or more with respect to 100 parts by mass of the resin component in the coating material. Hence, "to contain" inorganic particles can also be rephrased as the amount of inorganic particles is usually 5 parts by mass or more, preferably 30 parts by mass or more, more preferably 50 parts by mass or more, still more preferably 80 parts by mass or more, yet more preferably 100 parts by mass or more, and most preferably 120 parts by mass or more with respect to 100 parts by mass of the resin component in the coating material. Incidentally, the upper limit of the amount of inorganic particles is not particularly limited but may be, for example, usually 1000 parts by mass or less, preferably 500 parts by mass or less, and still more preferably 300 parts by mass or less with respect to 100 parts by mass of the resin component in the coating material.

According to one embodiment, the amount of the inorganic particles of component (E) may be usually 5 parts by mass or more and 1000 parts by mass or less, preferably 5 parts by mass or more and 500 parts by mass or less, 5 parts by mass or more and 300 parts by mass or less, 30 parts by mass or more and 1000 parts by mass or less, 30 parts by mass or more and 500 parts by mass or less, 30 parts by mass or more and 300 parts by mass or less, 50 parts by mass or more and 1000 parts by mass or less, 50 parts by mass or more and 500 parts by mass or less, 50 parts by mass or more and 300 parts by mass or less, 80 parts by mass or more and 1000 parts by mass or less, 80 parts by mass or more and 500 parts by mass or less, 80 parts by mass or more and 300 parts by mass or less, 100 parts by mass or more and 1000 parts by mass or less, 100 parts by mass or more and 500 parts by mass or less, 100 parts by mass or more and 300 parts by mass or less, 120 parts by mass or more and 1000 parts by mass or less, 120 parts by mass or more and 500 parts by mass or less, or 120 parts by mass or more and 300 parts by mass or less with respect to 100 parts by mass of the resin component in the coating material.

### (F) Active energy ray curable resin

The active energy ray curable resin of component (F) acts to form a hard coat by being polymerized and cured by active energy rays such as ultraviolet rays and electron beams.

Examples of the active energy ray curable resin of component (F) include polyfunctional (meth)acrylates, polyfunctional thiols, monomers copolymerizable with these, and polymers (prepolymers or oligomers) comprised of one or more kinds of these as constituent monomers. Examples of the polymer include a copolymer of a polyfunctional (meth)acrylate and a polyfunctional thiol.

As the polyfunctional (meth)acrylate, those described above as component (a1) in the description of the coating material for forming the first hard coat can be used. As the polyfunctional thiol, those described above as component (a2) in the description of the coating material for forming the first hard coat can be used.

Examples of the monomers copolymerizable with polyfunctional (meth)acrylates or polyfunctional thiols include (meth)acryloyl group-containing monofunctional reactive monomers such as methyl (meth)acrylate, ethyl (meth)acrylate, n-butyl (meth)acrylate, hexyl (meth)acrylate, 2-ethylhexyl (meth)acrylate, lauryl (meth)acrylate, isobornyl (meth)acrylate, dicyclopentenyl (meth)acrylate, dicyclopentenyloxyethyl (meth)acrylate, phenyl (meth)acrylate, phenyl cellosolve (meth)acrylate, 2-methoxyethyl (meth)acrylate, hydroxyethyl (meth)acrylate, hydroxypropyl (meth)acrylate, 2-acryloyloxyethyl hydrogen phthalate, dimethylaminoethyl (meth)acrylate, trifluoroethyl (meth)acrylate, and trimethylsiloxyethyl methacrylate; and monofunctional reactive monomers such as N-vinyl pyrrolidone and styrene.

As the active energy ray curable resin of component (F), one kind of these or a mixture of two or more kinds of these can be used. Incidentally, in the present specification, "(meth)acrylate" means acrylate or methacrylate.

### (E) Inorganic particles

The inorganic particles of component (E) act to dramatically enhance the hardness of the hard coat laminated film of the present invention.

Examples of the inorganic particles include silica (silicon dioxide); metal oxide particles such as aluminum oxide, zirconia, titania, zinc oxide, germanium oxide, indium oxide, tin oxide, indium tin oxide, antimony oxide, and cerium oxide; metal fluoride particles such as magnesium fluoride and sodium fluoride; metal sulfide particles; metal nitride particles; and metal particles.

Among these, particles of silica and aluminum oxide are preferable and particles of silica are more preferable in order to obtain a hard coat laminated film having a higher surface hardness. Examples of commercially available products of silica particles include SNOWTEX (trade name) manufactured by Nissan Chemical Corporation and Quartron (trade name) manufactured by Fuso Chemical Co., Ltd.

For the purpose of enhancing the dispersibility of inorganic particles in the coating material and enhancing the surface hardness of the hard coat laminated film to be obtained, it is preferable to use those obtained by treating the surface of the inorganic particles with silane-based coupling agents such as vinylsilane and aminosilane; titanate-based coupling agents; aluminate-based coupling agents; organic compounds having reactive functional groups such as ethylenically unsaturated bonding groups such as a (meth)acryloyl group, a vinyl group, and an allyl group and an epoxy group; surface treating agents such as fatty acid and fatty acid metal salts, or the like.

As the inorganic particles of component (E), one kind of these or a mixture of two or more kinds of these can be used.

The average particle diameter of the inorganic particles of component (E) may be usually 300 nm or less, preferably 200 nm or less, and more preferably 120 nm or less from the viewpoint of maintaining the transparency of the hard coat and reliably attaining the hardness improving effect. On the other hand, the lower limit of the average particle diameter is not particularly restricted but is usually at most about 1 nm at the finest in available inorganic particles.

In the present specification, the average particle diameter of the inorganic particles is a particle diameter at which the cumulation from the smaller particle side is 50% by mass in the particle diameter distribution curve measured by the laser diffraction/scattering method. The average particle diameter of the inorganic particles can be calculated as a particle diameter at which the cumulation from the smaller particle side is 50% by mass in the particle diameter distribution curve measured using a laser diffraction/scattering particle size analyzer "MT3200 II" (trade name) manufactured by Nikkiso Co., Ltd.

In the case of using the active energy ray curable resin of component (F) as a resin component in the coating material for forming the third hard coat, the amount of the inorganic particles of component (E) blended may be usually 30 parts by mass or more, preferably 50 parts by mass or more, more preferably 80 parts by mass or more, still more preferably 100 parts by mass or more, and most preferably 120 parts by mass or more with respect to 100 parts by mass of component (F) from the viewpoint of the surface hardness of the hard coat laminated film. On the other hand, this blended amount may be usually 300 parts by mass or less, preferably 250 parts by mass or less, and more preferably 200 parts by mass or less from the viewpoint of the transparency of the hard coat laminated film.

According to one embodiment, the amount of the inorganic particles of component (E) blended may be usually 30 parts by mass or more and 300 parts by mass or less, preferably 30 parts by mass or more and 250 parts by mass or less, 30 parts by mass or more and 200 parts by mass or less, 50 parts by mass or more and 300 parts by mass or less, 50 parts by mass or more and 250 parts by mass or less, 50 parts by mass or more and 200 parts by mass or less, 80 parts by mass or more and 300 parts by mass or less, 80 parts by mass or more and 250 parts by mass or less, 80 parts by mass or more and 200 parts by mass or less, 100 parts by mass or more and

300 parts by mass or less, 100 parts by mass or more and 250 parts by mass or less, 100 parts by mass or more and 200 parts by mass or less, 120 parts by mass or more and 300 parts by mass or less, 120 parts by mass or more and 250 parts by mass or less, or 120 parts by mass or more and 200 parts by mass or less with respect to 100 parts by mass of the active energy ray curable resin of component (F) (in the case of using the resin).

### (D) Leveling agent

It is preferable that the coating material for forming the third hard coat further contains (D) a leveling agent from the viewpoint of smoothing the surface of the third hard coat and facilitating the formation of the first hard coat.

As the leveling agent of component (D), those described above in the description of the coating material for forming the second hard coat can be used.

Among these, an acrylic leveling agent and a silicone-acrylic copolymer-based leveling agent are preferable as the leveling agent of component (D) to be used in the coating material for forming the third hard coat. As the leveling agent of component (D), one kind of these or a mixture of two or more kinds of these can be used.

In the case of using the active energy ray curable resin of component (F) as a resin component in the coating material for forming the third hard coat, the amount of the leveling agent of component (D) blended may be usually 0.01 part by mass or more, preferably 0.1 part by mass or more, and more preferably 0.2 parts by mass or more with respect to 100 parts by mass of component (F) from the viewpoint of smoothing the surface of the third hard coat and facilitating the formation of the first hard coat. On the other hand, this blended amount may be usually 1 part by mass or less, preferably 0.6 parts by mass or less, and more preferably 0.4 parts by mass or less from the viewpoint of being able to favorably applying the coating material for forming the first hard coat on the third hard coat without being repelled.

According to one embodiment, the amount of the leveling agent of component (D) blended may be usually 0.01 part by mass or more and 1 part by mass or less and preferably 0.01 part by mass or more and 0.6 parts by mass or less, 0.01 part by mass or more and 0.4 parts by mass or less, 0.1 part by mass or more and 1 part by mass or less, 0.1 part by mass or more and 0.6 parts by mass or less, 0.1 part by mass or more and 0.4 parts by mass or less, 0.2 parts by mass or more and 1 part by mass or less, 0.2 parts by mass or more and 0.6 parts by mass or less, or 0.2 parts by mass or more and 0.4 parts by mass or less with respect to 100 parts by mass of the active energy ray curable resin of component (F) (in the case of using the resin).

It is preferable that the coating material for forming the third hard coat further contains a compound having two or more isocyanate groups (-N=C=O) in one molecule and/or a photopolymerization initiator from the viewpoint of improving the curability thereof by active energy rays.

As the compound having two or more isocyanate groups in one molecule, those described above in the description of the coating material for forming the first hard coat can be used. As the compound having two or more isocyanate groups in one molecule, one kind of these or a mixture of two or more kinds of these can be used.

As the photopolymerization initiator, those described above in the description of the coating material for forming the first hard coat can be used. As the photopolymerization initiator, one kind of these or a mixture of two or more kinds of these can be used.

The coating material for forming the third hard coat can contain one or two or more kinds of additives such as an antistatic agent, a surfactant, a thixotropic agent, a fouling (or stain) inhibitor, a printability improver, an antioxidant, a weather resistant stabilizer, a light resistant stabilizer, an ultraviolet absorber, a heat stabilizer, a colorant, and organic particles, if desired.

The coating material for forming the third hard coat may contain a solvent, if desired, in order to dilute the coating material to a concentration at which coating is facilitated. The solvent is not particularly limited as long as it does not react with component (E), component (F), component (D), and other optional components or does not catalyze (promote) the self reaction (including degradation reaction) of these components. Examples of the solvent include 1-methoxy-2-propanol, ethyl acetate, n-butyl acetate, toluene, methyl ethyl ketone, methyl isobutyl ketone, diacetone alcohol, and acetone. Among these, 1-methoxy-2-propanol is preferable. As the solvent, one kind of these or a mixture of two or more kinds of these can be used.

The coating material for forming the third hard coat can be obtained by mixing and stirring these components.

The method for forming the third hard coat using the coating material for forming the third hard coat is not particularly limited, and a known web coating method can be used. Examples of the method include roll coating, gravure coating, reverse coating, roll brushing, dip coating, spray coating, spin coating, air knife coating, and die coating.

The thickness of the third hard coat may be preferably 10 µm or more and more preferably 15 µm or more from the viewpoint of the surface hardness of the hard coat laminated film. On the other hand, the thickness of the third hard coat may be preferably 30 µm or less, more preferably 27 µm or less, and still more preferably 25 µm or less from the viewpoint of the curling resistance and bending resistance of the hard coat laminated film.

According to one embodiment, the thickness of the third hard coat may be preferably 10 µm or more and 30 µm or less, 10 µm or more and 27 µm or less, 10 µm or more and 25 µm or less, 15 µm or more and 30 µm or less, 15 µm or more and 27 µm or less, or 15 µm or more and 25 µm or less.

Incidentally, in the aspect where the third hard coat is formed, an embodiment in which the same coating material as the coating material for forming the third hard coat is used as the coating material for forming the second hard coat is also preferable. In addition, in the aspect where the third hard coat is formed, it should be noted that the coating material for forming the second hard coat and the thickness are required to be set in consideration of the sum of the curling force by the first hard coat and the curling force by the third hard coat.

### Transparent resin film

The transparent resin film is a layer to be a transparent film substrate for forming the first hard coat; the first hard coat and the third hard coat; the first hard coat and the second hard coat; or the first hard coat, the second hard coat, and the third hard coat thereon.

The transparent resin film is not limited except that it exhibits high transparency and is preferably not limited except that it exhibits high transparency and is not colored, and any transparent resin film can be used. Examples of the transparent resin film include films of cellulose ester-based resins such as triacetyl cellulose; polyester-based resins such as polyethylene terephthalate; cyclic hydrocarbon-based resins such as ethylene norbornene copolymer; acrylic resins such as polymethyl methacrylate, polyethyl methacrylate, and vinylcyclohexane/methyl (meth)acrylate copolymer; aromatic polycarbonate-based resins; polyolefin-based resins such as polypropylene and 4-methyl-pentene-1; polyamide-based resins; polyarylate-based resins; polymer type urethane acrylate-based resins; polyimide-based resins and the like. These films include non-stretched films, uniaxially stretched films, and biaxially stretched films. In addition, these films include multilayer films in which one or two or more kinds of these are laminated by two or more layers.

The thickness of the transparent resin film is not particularly limited, and the transparent resin film may be set to any thickness, if desired. The thickness of the transparent resin film may be usually 20 µm or more and preferably 50 µm or more from the viewpoint of the handleability of the of the antiglare hard coat laminated film of the present invention. In a case where the antiglare hard coat laminated film of the present invention is used as a display face plate of a touch panel, the thickness of the transparent resin film may be usually 100 µm or more, preferably 200 µm or more, and more preferably 300 µm or more from the viewpoint of keeping the rigidity. In addition, the thickness of the transparent resin film may be usually 1500 µm or less, preferably 1200 µm or less, and more preferably 1000 µm or less from the viewpoint of meeting the demand for thinning of the device. In a case where the antiglare hard coat laminated film of the present invention is used in applications which do not require high rigidity other than a display face plate of a touch panel, the thickness of the transparent resin film may be usually 250 µm or less and preferably 150 µm or less from the viewpoint of economical efficiency.

The transparent resin film is preferably a transparent resin film of an acrylic resin. Examples of the acrylic resin include (meth)acrylic acid ester (co)polymers, copolymers mainly containing structural units derived from (meth)acrylic acid esters (usually at 50% by mole or more, preferably 65% by mole or more, and more preferably 70% by mole or more), and modified products thereof. Incidentally, (meth)acryl means acryl or methacryl. In addition, (co)polymer means polymer or copolymer.

Examples of the (meth)acrylic acid ester (co) polymers include methyl poly(meth)acrylate, ethyl poly(meth)acrylate, propyl poly(meth)acrylate, butyl poly(meth)acrylate, a methyl (meth)acrylate/butyl (meth)acrylate copolymer, and an ethyl (meth)acrylate/butyl (meth)acrylate copolymer.

Examples of the copolymers mainly comprised of structural units derived from (meth)acrylic acid esters include an ethylene/methyl (meth)acrylate copolymer, a styrene/methyl (meth)acrylate copolymer, a vinylcyclohexane/methyl (meth)acrylate copolymer, a maleic anhydride/methyl (meth)acrylate copolymer, and an N-substituted maleimide/methyl (meth)acrylate copolymer.

Examples of the modified product include a polymer into which a lactone ring structure is introduced by an intramolecular cyclization reaction; a polymer into which glutaric anhydride is introduced by an intramolecular cyclization reaction; and a polymer into which an imide structure is introduced by a reaction with an imidizing agent (for example, methylamine, cyclohexylamine, and ammonia) which is hereinafter sometimes referred to as a poly(meth)acrylimide-based resin.

Examples of the transparent resin film of an acrylic resin include films formed from one kind of these or mixtures of two or more kinds of these. In addition, these films include multilayer films in which one or two or more kinds of these are laminated by two or more layers.

The transparent resin film is more preferably a film formed from a vinylcyclohexane/methyl (meth)acrylate copolymer. By the use of this transparent resin film, it becomes possible to obtain an antiglare hard coat laminated film excellent in surface hardness, abrasion resistance, transparency, surface smoothness, appearance, rigidity, moisture resistance, and antiglare property, which can be suitably used as a display face plate of a touch panel. The content of the structural units derived from methyl (meth)acrylate in the vinyl cyclohexane/methyl (meth)acrylate copolymer may be usually 50 to 95% by mole, preferably 65 to 90% by mole, and more preferably 70 to 85% by mole with respect to 100% by mole of the sum of structural units derived from all the polymerizable monomers. Here, the term "polymerizable monomer" means methyl (meth)acrylate, vinylcyclohexane, and monomers copolymerizable with these. The copolymerizable monomer is usually a compound having a carbon-carbon double bond and is typically a compound having an ethylenic double bond.

The transparent resin film is more preferably a film formed from a poly(meth)acrylimide-based resin. By the use of this transparent resin film, it becomes possible to obtain an antiglare hard coat laminated film excellent in surface hardness, abrasion resistance, transparency, surface smoothness, appearance, rigidity, heat resistance, dimensional stability under heat, and antiglare property, which can be suitably used as a display face plate of a touch panel.

The yellowness index (measured using a colorimeter "SolidSpec-3700" (trade name) manufactured by Shimadzu Corporation in conformity with JIS K7105:1981) of the acrylic resin constituting the transparent resin film may be preferably 3 or less, more preferably 2 or less, and still more preferably 1 or less. An antiglare hard coat laminated film that is suitable as a member of an image display device can be obtained by the use of an acrylic resin having a yellowness index of 3 or less. It is more preferable as the yellowness index is lower.

The melt mass flow rate (measured under conditions of 260°C and 98.07 N in conformity with ISO 1133) of the acrylic resin constituting the transparent resin film may be preferably 0.1 to 20 g/10 minutes and more preferably 0.5 to 10 g/10 minutes from the viewpoint of extrusion load and stability of the molten film.

In addition, the acrylic resin can further contain, if desired, additives such as a thermoplastic resin other than an acrylic resin; a pigment, an inorganic filler, an organic filler, a resin filler; a lubricant, an antioxidant, a weather resistant stabilizer, a heat stabilizer, a mold release agent, an antistatic agent, and a surfactant to the extent to which the object of the present invention is not impaired. The amount of these optional components blended is usually about 0.01 to 10 parts by mass with respect to 100 parts by mass of the acrylic resin.

The transparent resin film is preferably a transparent multilayer film in which a first acrylic resin layer (α1); an aromatic polycarbonate-based resin layer (β); and a second acrylic resin layer (α2) are directly laminated in this order. Incidentally, the present invention will be herein described on the assumption that a touch surface is formed on the α1 layer side.

An acrylic resin is excellent in surface hardness but is likely to be insufficient in cutting processability while an aromatic polycarbonate-based resin is excellent in cutting processability but is likely to be insufficient in surface hardness. For this reason, by the use of a transparent multilayer film having the layer configuration, the weak points of both of these are compensated and an antiglare hard coat laminated film excellent in both of the surface hardness and cutting processability can be easily obtained.

The layer thickness of the α1 layer is not particularly limited. The thickness of the α1 layer may be usually 20 µm or more, preferably 40 µm or more, more preferably 60 µm or more, and still more preferably 80 µm or more from the viewpoint of the surface hardness of the antiglare hard coat laminated film of the present invention.

The layer thickness of the α2 layer is not particularly limited. It is preferable that the thickness of the α2 layer is the same as the layer thickness of the α1 layer from the viewpoint of curling resistance of the antiglare hard coat laminated film of the present invention.

In this connection, the "same layer thickness" referred to herein should not be interpreted as exactly the same thickness in the physicochemically strict meaning. It should be interpreted as the same layer thickness within the range of fluctuation of process and quality control usually performed industrially. If the layer thicknesses are the same within the range of fluctuation of process and quality control usually performed industrially, the curling resistance of the multilayer film can be favorably maintained. In the case of a non-stretched multilayer film by T die coextrusion method, the layer thickness is controlled in process and quality control usually in a range of about -5 to +5 µm, and thus a layer thickness of 65 µm and a layer thickness of 75 µm should be interpreted as the same, for example, when the set layer thickness is 70 µm. The "same layer thickness" herein can be rephrased as "substantially the same layer thickness".

The layer thickness of the β layer is not particularly limited. The thickness of the β layer may be usually 20 µm or more and preferably 80 µm or more from the viewpoint of the cutting processability of the antiglare hard coat laminated film of the present invention.

As the acrylic resin to be used in the α1 layer and the α2 layer, those described above can be used.

Incidentally, as the acrylic resin to be used in the α1 layer and the acrylic resin to be used in the α2 layer, those having different resin properties, for example, different kinds of acrylic resins and acrylic resins having different melt mass flow rates, glass transition temperatures and the like may be used. It is preferable to use those having the same resin properties from the viewpoint of the curling resistance of the antiglare hard coat laminated film of the present invention. For example, it is one of the preferred embodiments to use those of the same lot in the same grade.

As the aromatic polycarbonate-based resin to be used in the β layer, it is possible to use one kind or a mixture of two or more kinds of aromatic polycarbonate-based resins, for example, a polymer obtained from an aromatic dihydroxy compound such as bisphenol A, dimethyl bisphenol A, or 1,1-bis(4-hydroxyphenyl)-3,3,5-trimethylcyclohexane and phosgene by the interfacial polymerization method; a polymer obtained by the transesterification reaction of an aromatic dihydroxy compound such as bisphenol A, dimethyl bisphenol A, or 1,1-bis(4-hydroxyphenyl)-3,3,5-trimethylcyclohexane and a diester of carbonic acid such as diphenyl carbonate.

Examples of a preferred optional component which can be contained in the aromatic polycarbonate-based resin include core-shell rubber. It is possible to further enhance the cutting processability and impact resistance of the hard coat laminated film by the use of core-shell rubber at 0 to 30 parts by mass (the aromatic polycarbonate-based resin at 100 to 70 parts by mass) and preferably 0 to 10 parts by mass (the aromatic polycarbonate-based resin at 100 to 90 parts by mass) with respect to 100 parts by mass of the sum of the aromatic polycarbonate-based resin and the core-shell rubber.

Examples of the core-shell rubber include core-shell rubbers such as a methacrylic acid ester-styrene/butadiene rubber graft copolymer, an acrylonitrile-styrene/butadiene rubber graft copolymer, an acrylonitrile-styrene/ethylene-propylene rubber graft copolymer, an acrylonitrile-styrene/acrylic acid ester graft copolymer, a methacrylic acid ester/acrylic acid ester rubber graft copolymer, a methacrylic acid ester-styrene/acrylic acid ester rubber graft copolymer, and a methacrylic acid ester-acrylonitrile/acrylic acid ester rubber graft copolymer. As the core-shell rubber, one kind of these or a mixture of two or more kinds of these can be used.

In addition, the aromatic polycarbonate-based resin can further contain, if desired, additives such as a thermoplastic resin other than the aromatic polycarbonate-based resin and the core-shell rubber; a pigment, an inorganic filler, an organic filler, a resin filler; a lubricant, an antioxidant, a weather resistant stabilizer, a heat stabilizer, a mold release agent, an antistatic agent, and a surfactant to the extent to which the object of the present invention is not impaired. The amount of these optional components blended is usually about 0.01 to 10 parts by mass with respect to 100 parts by mass of the sum of the aromatic polycarbonate-based resin and the core-shell rubber.

The method for producing the transparent resin film is not particularly limited. Examples of a preferred production method in a case where the transparent resin film is a transparent multilayer film in which a first poly(meth)acrylimide-based resin layer (α1); an aromatic polycarbonate-based resin layer (β); and a second poly(meth)acrylimide-based resin layer (α2) are directly laminated in this order include a method described in JP-A-2015-083370. Further, when the first hard coat and the second hard coat are formed, the surface on which a hard coat is to be formed or both surfaces of the transparent resin film may be subjected in advance to an easy adhesion treatment such as a corona discharge treatment or anchor coat formation in order to enhance the adhesive strength with the hard coat.

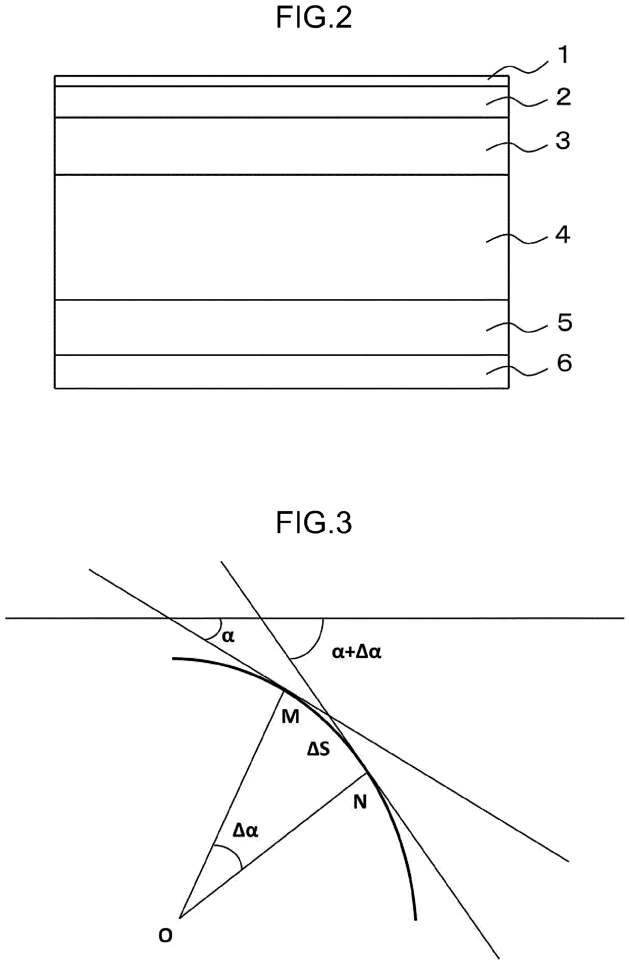

FIG. 2 is a conceptual diagram of a cross section illustrating a non-limiting example of the antiglare hard coat laminated film of the present invention. In the drawing, this hard coat laminated film sequentially has a first hard coat 1, a third hard coat 2, a first poly(meth)acrylimide-based resin layer (a1) 3, an aromatic polycarbonate-based resin layer (β) 4, a second poly(meth)acrylimide-based resin layer (α2) 5, and a second hard coat 6 from the touch surface side.

The antiglare hard coat laminated film of the present invention may have an optional layer(s) other than the first hard coat, the second hard coat, the third hard coat, and the transparent resin film layer, if desired. Examples of the optional layer include a fourth hard coat, an anchor coat layer, a pressure-sensitive adhesive layer, a transparent conductive layer, a high refractive index layer, a low refractive index layer, and an antireflection layer.

Components and thickness of the optional fourth hard coat are not particularly limited but may be, for example, those described above for the second hard coat or third hard coat.

In the antiglare hard coat laminated film of the present invention (for any configuration of first hard coat/transparent resin film layer, first hard coat/transparent resin film layer/second hard coat, first hard coat/third hard coat/transparent resin film layer, or first hard coat/third hard coat/transparent resin film layer/second hard coat), it is preferable that no scratches are found when the antiglare hard coat laminated film is placed on a Gakushin-type tester in accordance with JIS L0849:2013 so that the first hard coat is on the surface side; a steel wool of #0000 is subsequently attached to a rubbing finger of the Gakushin-type tester and a load of 500 g is then applied; and, after 100 reciprocating rubbings of the surface of the first hard coat under conditions that the moving speed of the rubbing finger is 300 mm/min and the moving distance is 30 mm, the rubbed portion is visually observed. It is more preferable that no scratches are found after 150 reciprocating rubbings of the surface of the first hard coat when the antiglare hard coat laminated film is subjected to the test. It is still more preferable that no scratches are found after 200 reciprocating rubbings of the surface of the first hard coat when the antiglare hard coat laminated film is subjected to the test. It is yet more preferable that no scratches are found after 250 reciprocating rubbings of the surface of the first hard coat when the antiglare hard coat laminated film is subjected to the test. It is most preferable that no scratches are found after 300 reciprocating rubbings of the surface of the first hard coat when the antiglare hard coat laminated film is subjected to the test.

The antiglare hard coat laminated film of the present invention is preferably one in which that no scratches are found after a larger number of reciprocating rubbings of the surface of the first hard coat when the antiglare hard coat laminated film is subjected to the aforementioned test. The antiglare hard coat laminated film of the present invention can be suitably used as a member of an image display device as it exhibits such excellent abrasion resistance (or steel wool resistance).

In the antiglare hard coat laminated film of the present invention (for any configuration of first hard coat/transparent resin film layer, first hard coat/transparent resin film layer/second hard coat, first hard coat/third hard coat/transparent resin film layer, or first hard coat/third hard coat/transparent resin film layer/second hard coat), the Y value of an XYZ color system based on a 2-degree field of view may be usually 4.2% or less, preferably 3.5% or less, and more preferably 3.0% or less from the viewpoint of antiglare property. On the other hand, the Y value of an XYZ color system based on a 2-degree field of view may be usually 1.5% or more and preferably 2.0% or more from the viewpoint of preventing the displayed image from becoming chalky.

According to one embodiment, the Y value of an XYZ color system based on a 2-degree field of view may be usually 1.5% or more and 4.2% or less, preferably 1.5% or more and 3.5% or less, 1.5% or more and 3.0% or less, 2.0% or more and 4.2% or less, 2.0% or more and 3.5% or less, or 2.0% or more and 3.0% or less.

The Y value of an XYZ color system based on a 2-degree field of view can be measured using a spectrophotometer "SolidSpec-3700" (trade name) and a reflection unit "Absolute Reflectance Measuring Apparatus Incident Angle 5°" (trade name) manufactured by Shimadzu Corporation under the condition of 5 degree specular reflection (the reflection unit is installed in front of the integrating sphere; a specular reflection value excluding diffused light is attained) in conformity with the instruction manual for the spectrophotometer.

In the antiglare hard coat laminated film of the present invention (for any configuration of first hard coat/transparent resin film layer, first hard coat/transparent resin film layer/second hard coat, first hard coat/third hard coat/transparent resin film layer, or first hard coat/third hard coat/transparent resin film layer/second hard coat), the haze may be usually 3% or more and preferably 5% or more from the viewpoint of antiglare property although it also depends on the level of antiglare property to be imparted. On the other hand, the Y value of an XYZ color system based on a 2-degree field of view may be usually 30% or less and preferably 25% or less from the viewpoint of preventing the displayed image from becoming chalky.

According to one embodiment, the haze may be usually 3% or more and 30% or less, preferably 3% or more and 25% or less, 5% or more and 30% or less, or 5% or more and 25% or less.

The haze can be measured using a turbidity meter "NDH 2000" (trade name) manufactured by NIPPON DENSHOKU INDUSTRIES Co., LTD. in conformity with JIS K7136:2000.

In the antiglare hard coat laminated film of the present invention (for any configuration of first hard coat/transparent resin film layer, first hard coat/transparent resin film layer/second hard coat, first hard coat/third hard coat/transparent resin film layer, or first hard coat/third hard coat/transparent resin film layer/second hard coat), the total light transmittance may be preferably 85% or more, more preferably 88% or more, and still more preferably 90% or more. The antiglare hard coat laminated film of the present invention can be suitably used as a member of an image display device as the total light transmittance thereof is 85% or more. It is more preferable as the total light transmittance is higher. The total light transmittance can be measured using a turbidity meter "NDH 2000" (trade name) manufactured by NIPPON DENSHOKU INDUSTRIES Co., LTD. in conformity with JIS K7361-1:1997.

In the antiglare hard coat laminated film of the present invention (for any configuration of first hard coat/transparent resin film layer, first hard coat/transparent resin film layer/second hard coat, first hard coat/third hard coat/transparent resin film layer, or first hard coat/third hard coat/transparent resin film layer/second hard coat), the minimum bending radius may be preferably 70 mm or less, more preferably 60 mm or less, still more preferably 50 mm or less, yet more preferably 40 mm or less, and most preferably 30 mm or less. The antiglare hard coat laminated film of the present invention can be easily handled as a film roll and is advantageous in terms of production efficiency and the like as the minimum bending radius is preferably 70 mm or less. It is more preferable as the minimum bending radius is smaller. Here, the minimum bending radius can be measured in conformity with the test (vi) to be described in the following Examples. Incidentally, the minimum bending radius is a bending radius immediately before a crack is generated on the surface of the bent portion when the antiglare hard coat laminated film is bent and is an index indicating the limit of bending. The bending radius is defined in the same manner as the radius of curvature.

The radius of curvature is defined as follows. When the length from a point M to a point N on a curve is denoted as ΔS; the difference between the inclination of the tangent at the point M and the inclination of the tangent at the point N is denoted as Δα; and the intersection of a line which is perpendicular to the tangent at the point M and intersects at the point M and a line which is perpendicular to the tangent at the point N and intersects at the point N is denoted as O, the curve from the point M to the point N can be approximated to a circular arc when ΔS is sufficiently small (see FIG. 3). The radius at this time is defined as the radius of curvature. In addition, ∠MON = Δα when the radius of curvature is denoted as R, and Δα is also sufficiently small when ΔS is sufficiently small, and thus ΔS = RΔα holds and R = ΔS/Δα.

In the antiglare hard coat laminated film of the present invention (for any configuration of first hard coat/transparent resin film layer, first hard coat/transparent resin film layer/second hard coat, first hard coat/third hard coat/transparent resin film layer, or first hard coat/third hard coat/transparent resin film layer/second hard coat), the water contact angle on the first hard coat surface may be preferably 95 degrees or more, more preferably 100 degrees or more, and still more preferably 105 degrees or more. The first hard coat will make a touch surface in a case where the antiglare hard coat laminated film of the present invention is used as a display face plate of a touch panel. As the water contact angle on the first hard coat surface is 95 degrees or more, it is possible to slide a finger or a pen on the touch surface as desired and thus to operate the touch panel. It is more preferable as the water contact angle is higher from the viewpoint of sliding a finger or a pen as desired. The upper limit of the water contact angle is not particularly limited, but usually about 120 degrees is sufficient. Here, the water contact angle can be measured in conformity with the test (viii) to be described in the following Examples.

In the antiglare hard coat laminated film of the present invention (for any configuration of first hard coat/transparent resin film layer, first hard coat/transparent resin film layer/second hard coat, first hard coat/third hard coat/transparent resin film layer, or first hard coat/third hard coat/transparent resin film layer/second hard coat), the water contact angle on the first hard coat surface after being wiped with cotton, preferably after being wiped with cotton back and forth 5,000 times, more preferably after being wiped with cotton back and forth 7,500 times, still more preferably after being wiped with cotton back and forth 10,000 times, and most preferably after being wiped with cotton back and forth 12,500 times may be preferably 95 degrees or more, more preferably 100 degrees or more, and still more preferably 105 degrees or more. As the water contact angle on the first hard coat surface after being wiped with cotton back and forth 5,000 times is 95 degrees or more, the surface properties such as finger slipperiness can be maintained even if the surface is repeatedly wiped with a handkerchief and the like. It is more preferable as the number of times of wiping with cotton in which the water contact angle of 95 degrees or more can be kept is larger. Here, the water contact angle after wiping with cotton can be measured in conformity with the test (ix) to be described in the following Examples.

In the antiglare hard coat laminated film of the present invention (for any configuration of first hard coat/transparent resin film layer, first hard coat/transparent resin film layer/second hard coat, first hard coat/third hard coat/transparent resin film layer, or first hard coat/third hard coat/transparent resin film layer/second hard coat), the yellowness index is preferably 3 or less, more preferably 2 or less, and still more preferably 1 or less. It is more preferable as the yellowness index is lower. The antiglare hard coat laminated film of the present invention can be suitably used as a member of an image display device as the yellowness index is 3 or less. The yellowness index can be measured using a colorimeter "SolidSpec-3700" (trade name) manufactured by Shimadzu Corporation in conformity with JIS K7105:1981.

The antiglare hard coat laminated film of the present invention has preferred properties as described above and thus can be suitably used as an article or a member of an article. Examples of the article or the member of an article include image display devices such as liquid crystal displays, plasma displays, and electroluminescent displays and members such as display face plates and housings thereof; televisions, personal computers, tablet information devices, smart phones, and members such as housings and display face plates thereof; furthermore, refrigerators, washing machines, cupboards, clothes racks, and panels constituting these; windows and doors of buildings; vehicles, windows of vehicles, windshields, roof windows, instrument panels and the like; electronic signboards and protection plates thereof; show windows; and solar cells and members such as housings and front plates thereof.

### EXAMPLES

Hereinafter, the present invention will be described with reference to Examples, but the present invention is not limited thereto.

### Measuring methods

### (i) Abrasion resistance 1 (steel wool resistance)

A test piece taken such that the size thereof was 150 mm in length and 50 mm in width and the machine direction of an antiglare hard coat laminated film was in the longitudinal direction of the test piece was placed on a Gakushin-type tester according to JIS L0849:2013 (friction tester type 2) such that the first hard coat was a surface. A steel wool of #0000 was subsequently attached to a friction terminal of the Gakushin-type tester and a load of 500 g was then applied. After 100 cycles of reciprocating rubbings of the surface of the test piece (the first hard coat surface) under conditions that the moving speed of the friction terminal is 300 mm/min and the moving distance is 30 mm, the rubbed portion was visually observed. In the case where no scratch was found, the operation of additionally carrying out 50 reciprocating rubbings and then visually observing the rubbed portion was repeated, and evaluation of abrasion resistance was performed by using the following criteria. According to the criteria, it can be said that it is acceptable from the practical perspective when the evaluated result is E or more, namely, A to E and it is highly favorable when the evaluated result is C or more.
A: No scratches were found even after 300 cycles of reciprocation.
B: No scratches were found after 250 cycles of reciprocation but scratches were found after 300 cycles of reciprocation.
C: No scratches were found after 200 cycles of reciprocation but scratches were found after 250 cycles of reciprocation.
D: No scratches were found after 150 cycles of reciprocation but scratches were found after 200 cycles of reciprocation.
E: No scratches were found after 100 cycles of reciprocation but scratches were found after 150 cycles of reciprocation.
F: Scratches were found after 100 cycles of reciprocation.

### (ii) Y value of XYZ color system based on 2-degree field of view (antiglare property evaluation)

The Y value of an XYZ color system based on a 2-degree field of view was measured using a spectrophotometer "SolidSpec-3700" (trade name) and a reflection unit "Absolute Reflectance Measuring Apparatus Incident Angle 5°" (trade name) manufactured by Shimadzu Corporation under the condition of 5 degree specular reflection (the reflection unit was installed in front of the integrating sphere; a specular reflection value excluding diffused light was attained) in conformity with the instruction manual for the spectrophotometer.

### (iii) Haze

The haze was measured using a turbidity meter "NDH 2000" (trade name) manufactured by NIPPON DENSHOKU INDUSTRIES Co., LTD. in conformity with JIS K7136:2000.

### (iv) Total light transmittance

The total light transmittance was measured using a turbidity meter "NDH 2000" (trade name) manufactured by NIPPON DENSHOKU INDUSTRIES Co., LTD. in conformity with JIS K7361-1:1997.

### (v) Yellowness index

The yellowness index was measured using a colorimeter "SolidSpec-3700" (trade name) manufactured by Shimadzu Corporation in conformity with JIS K7105:1981.

### (vi) Minimum bending radius

With reference to Bending Formability (B method) in JIS-K6902:2007, a test piece of an antiglare hard coat laminated film was conditioned at a temperature of 23°C ± 2°C and a relative humidity of 50 ± 5% for 24 hours, and thereafter the test piece was bent to form a curve at a bending temperature of 23°C ± 2°C at a bending line with a direction perpendicular to the machine direction of the antiglare hard coat laminated film so that the first hard coat of the antiglare hard coat laminated film was on the outer side, and for the resultant, measurement was performed. The radius of the front face of the shaping jig having the smallest radius of the front face among shaping jigs with no crack generated was defined as the minimum bending radius. The "front face" has the same meaning as the term regarding a shaping jig in the B method defined in Paragraph 18.2 in JIS K6902:2007.

### (vii) Handling property

An antiglare hard coat laminated film roll having a winding length of 300 m was rewound at a line speed of 20 m/min, and the winding form appearance and the first hard coat surface of the antiglare hard coat laminated film were then visually observed, and the handling property was evaluated according to the following criteria.
⊚ (very good): Cracks were not acknowledged. Winding form appearance was also favorable.
○ (good): Cracks were not acknowledged. However, slackening and the like occurred and winding form appearance was insufficient.
Δ (slightly poor): Cracks were generated at 1 to 10 places in winding length of 300 m.
× (poor): Cracks were generated at 11 or more places in winding length of 300 m.

### (viii) Water contact angle

The water contact angle was measured by a method in which the water contact angle was calculated from the width and height of a water droplet on the first hard coat surface of an antiglare hard coat laminated film using an automatic contact angle meter "DSA 20" (trade name) manufactured by KRUSS GmbH (see JIS R3257:1999).

### (ix) Abrasion resistance 2 (water contact angle after wipes with cotton)

A test piece of a hard coat laminated film was prepared in a size of 150 mm length and 50 mm width so that the machine direction of the hard coat laminated film corresponded to the longitudinal direction of the test piece. The test piece was placed on a Gakushin-type tester (friction tester: type 2) in accordance with JIS L0849:2013 so that the first hard coat of the hard coat laminated film was on the surface side. A stainless steel sheet (10 mm length, 10 mm width, 1 mm thickness) covered with a four-ply gauze (a type 1 medical gauze available from Kawamoto Corporation) was attached to a rubbing finger of the Gakushin-type tester, and the resultant was set so that the sheet face of the stainless steel sheet came into contact with the test piece. A load of 350 g was applied. After 5000 reciprocating rubbings of the first hard coat surface of the test piece under conditions that the moving distance of the rubbing finger was 60 mm and the speed was 1 cycle/sec, the water contact angle on the cotton-wiped portion was measured in accordance with the method in the (viii). In the case where the water contact angle was 95° or more, the operation of additionally carrying out 2500 reciprocating rubbings and then measuring the water contact angle on the cotton-wiped portion in accordance with the method in the (viii) was repeated, and evaluation was performed by using the following criteria. According to the criteria, it is acceptable from the practical perspective when the result is D or better, namely, A to D and it can be evaluated as being highly favorable when the result is B or better.
A: The water contact angle was 95° or more even after 12500 cycles of reciprocation.
B: The water contact angle was 95° or more after 10000 cycles but the water contact angle was less than 95° after 12500 cycles of reciprocation.
C: The water contact angle was 95° or more after 7500 cycles of reciprocation but the water contact angle was less than 95° after 10000 cycles of reciprocation.
D: The water contact angle was 95° or more after 5000 cycles of reciprocation but the water contact angle was less than 95° after 7500 cycles of reciprocation.
E: The water contact angle was less than 95° after 5000 cycles of reciprocation.

### (x) Surface smoothness (surface appearance)

The surface (i.e., each of both surfaces) of an antiglare hard coat laminated film was visually observed while irradiating with a fluorescent light from various incident angles, and evaluation was performed by using the following criteria.
⊚ (very good): No undulations or flaws were found on the surface. No cloudiness was perceived even when the surface was seen through with a light irradiated closely.
○ (good): A portion with a little cloudiness was found when the surface was seen through with a light irradiated closely.
Δ (slightly poor): Undulations or flaws were found on the surface in a small quantity when the surface was looked at closely. Further, cloudiness was perceived.
× (poor): Undulations or flaws were found on the surface in a large quantity. Further, cloudiness was clearly perceived.

### (xi) Cross-cut test (adhesiveness)

In accordance with JIS K5600-5-6:1999, a square lattice pattern cut consisting of 100 cells (1 cell = 1 mm x 1 mm) was provided on the first hard coat surface of an antiglare hard coat laminated film. Thereafter, a tape for adhesion tests was attached on the square lattice pattern cut and rubbed with fingers and then peeled off. The criteria for evaluation were in accordance with Table 1 in the above standard of JIS.
Classification 0: The edges of the cuts were completely smooth; none of the squares of the lattice was detached.
Classification 1: Detachment of small flakes of the coat was seen at the intersections of the cuts. A cross-cut area of not greater than 5% was affected.
Classification 2: The coat flaked along the edges and/or at the intersections of the cuts. A cross-cut area of greater than 5%, but not greater than 15%, was affected.
Classification 3: The coat flaked along the edges of the cuts partly or wholly in large ribbons, and/or it flaked partly or wholly on different parts of the squares. A cross-cut area of greater than 15%, but not greater than 35%, was affected.
Classification 4: The coat flaked along the edges of the cuts partly or wholly in large ribbons and/or some squares detached partly or wholly. A cross-cut area of greater than 35%, but not greater than 65%, was affected.
Classification 5: This criterion was defined as the case where the degree of flaking was greater than that in Classification 4.

### (xii) Cutting processability (condition of curved cutting-processed line)

A hard coat laminated film was provided with a cut hole in true circle with a diameter of 2 mm and a cut hole in true circle with a diameter of 0.5 mm by using a router processing machine automatically controlled with a computer. The mill used then was a four-bladed superhard-alloy mill with nicks that has a cylindrically round tip, and the blade diameter was appropriately selected depending on a portion to be processed. Subsequently, the cut hole with a diameter of 2 mm was observed for the cut edge surface visually or with a microscope (100x) and evaluation was performed by using the following criteria. Similarly, the cut hole with a diameter of 0.5 mm was observed for the cut edge surface visually or with a microscope (100x) and evaluation was performed by using the following criteria. The result of the former case and the result of the latter case were listed in this order in the tables below.
⊚: (very good): No crack or burr was found even in microscopic observation.
○: (good): No crack was found even in microscopic observation but a burr was found.
Δ: (slightly poor): No crack was found in visual observation but a crack was found in microscopic observation.
× : (poor): A crack was found even in visual observation.

### (xiii) Pencil hardness

The pencil hardness of the first hard coat surface of an antiglare hard coat laminated film was measured using a pencil "UNI" (trade name) manufactured by MITSUBISHI PENCIL CO., LTD. under the conditions of a 25 mm test length and a 750 g load in conformity with JIS K 5600-5-4:1999 except that the test speed was set to 2 mm/sec and the number of tests was set to 5 times. The presence or absence of a scar generated was judged by visually observing the sample surface under a fluorescent light and at a position 50 cm away from the fluorescent light.

### Raw materials used

### (A) Copolymer of (a1) polyfunctional (meth)acrylate and (a2) polyfunctional thiol

(A-1) "STAR-501" (trade name) manufactured by OSAKA ORGANIC CHEMICAL INDUSTRY LTD. A copolymer having a so-called dendrimer structure of dipentaerythritol hexaacrylate and a tetrafunctional thiol. Sulfur content: 2.2% by mass. Mass average molecular weight: 12,000, number average molecular weight: 940, and Z average molecular weight: 73,000.

### (A') Reference

(A'-1) Dipentaerythritol hexaacrylate (hexafunctional).
(A'-2) A compound having four secondary thiol groups in one molecule "Karenz MT PE-1" (trade name) manufactured by SHOWADENKO K.K. Pentaerythritol tetrakis(3-mercaptobutyrate).

### (B) Water repellent

(B-1) An acryloyl group-containing fluoropolyether-based water repellent "KY-1203" (trade name) manufactured by Shin-Etsu Chemical Co., Ltd. Solid content: 20% by mass.
(B-2) A methacryloyl group-containing fluoropolyether-based water repellent "FOMBLIN MT70" (trade name) manufactured by Solvay S. A. Solid content: 70% by mass.
(B-3) A fluoropolyether-based water repellent (having no (meth)acryloyl group).
(B-4) An acrylic-ethylene copolymer wax-based water repellent.
(B-5) An acryloyl group-containing fluoroalkyl-based water repellent (2-(perfluorobutyl)ethyl acrylate) "CHEMINOX FAAC-4" (trade name) manufactured by UNIMATEC CO., LTD. Solid content: 100% by mass.

### (C) Fine resin particles having average particle diameter of 0.5 to 10 µm

(C-1) Truly spherical silicon-based fine resin particles "Tospearl 120" (trade name) manufactured by Momentive Performance Materials. Inc. Average particle diameter: 2 µm.
(C-2) Truly spherical silicon-based fine resin particles "Tospearl 130" (trade name) manufactured by Momentive Performance Materials. Inc. Average particle diameter: 3 µm.

### (C') Reference fine particles

(C'-1) Silica fine particles "SO-E6" (trade name) manufactured by Admatechs Company Limited. Average particle diameter: 2 µm.

### (D) Leveling agent

(D-1) An acrylic polymer-based leveling agent "BYK-399" (trade name) manufactured by BYK Japan KK. Solid content: 100% by mass.

### (E) Inorganic particles

(E-1) Silica fine particles with an average particle diameter of 20 nm subjected to surface treatment using a vinyl group-containing silane coupling agent.

### (F-1) Pentaerythritol triacrylate (trifunctional).

### (G) Optional components

(G-1) An acetophenone-based photopolymerization initiator (1-hydroxy-cyclohexyl-phenyl ketone) "IRGACURE 184" (trade name) manufactured by BASF SE.
(G-2) An acetophenone-based photopolymerization initiator (2-hydroxy-1-{4-[4-(2-hydroxy-2-methyl-propionyl)-benzyl]phenyl}-2-methyl-propane-1-one) "IRGACURE 127" (trade name) manufactured by BASF SE.
(G-3) Methyl isobutyl ketone
(G-4) 1-Methoxy-2-propanol

### (H1) Coating material for forming the first hard coat

(H1-1) A coating material was obtained by mixing and stirring 100 parts by mass of the component (A-1), 2 parts by mass of the component (B-1) (0.4 parts by mass in solid content), 0.1 part by mass of the component (B-2) (0.07 parts by mass in solid content), 2 parts by mass of the component (C-1), 2 parts by mass of the component (G-1), 1 part by mass of the component (G-2), 40 parts by mass of the component (G-3), and 100 parts by mass of the component (G-4). The compositiom of this coating material is presented in Table 1. In this regard, the amounts in solid content are listed in the tables except for the solvents ((G-3) and (G-4)). In addition, the "first HC coating material" in the tables represents the coating material for forming the first hard coat. The same applies hereinafter.
(H1-2 to H1-14) Coating materials were each obtained in the same manner as in (H1-1) except that the compositions of the coating materials were changed as presented in one of Tables 1 to 3.

### (H2) Coating material for forming the second hard coat

(H2-1) A coating material was obtained by mixing and stirring 100 parts by mass of the component (A-1), 0.5 parts by mass of the component (D-1), 2 parts by mass of the component (G-1), 1 part by mass of the component (G-2), 40 parts by mass of the component (G-3), and 100 parts by mass of the component (G-4). The composition of this coating material is presented in Table 1. In this regard, the amounts in solid content are listed in the tables except for the solvents ((G-3) and (G-4)). In addition, the "second HC coating material" in the tables represents the coating material for forming the second hard coat. The same applies hereinafter.
(H2-2 to H2-4) Coating materials were each obtained in the same manner as in (H2-1) except that the compositions of the coating materials were changed as presented in Table 1.

### (H3) Coating material for forming the third hard coat

(H3-1) A coating material was obtained by mixing and stirring 100 parts by mass of the component (F-1), 140 parts by mass of the component (E-1), 0.2 parts by mass of the component (D-1), 17 parts by mass of the component (G-1), and 200 parts by mass of the component (G-4).

### (P) Transparent resin film

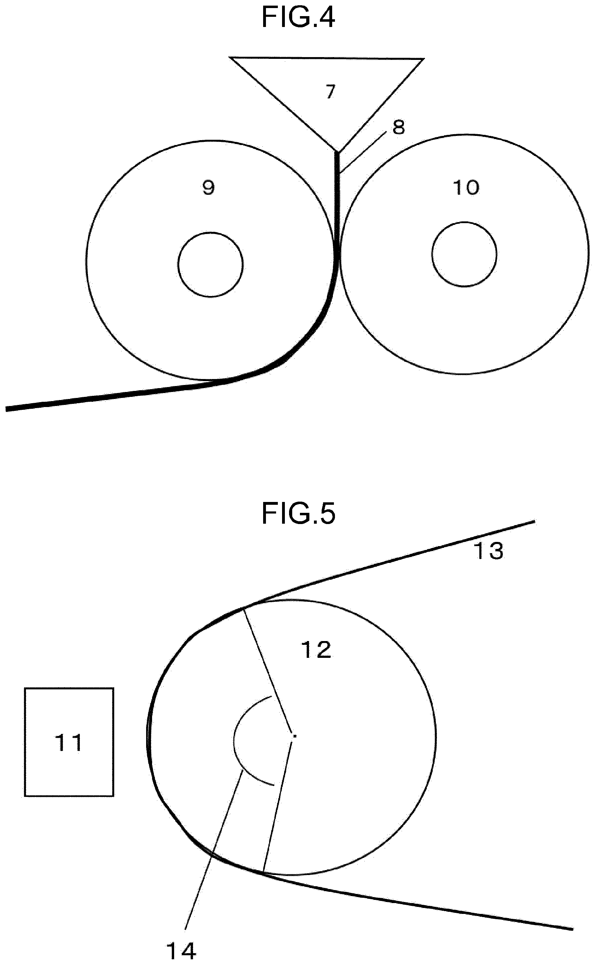

(P-1) Using an apparatus equipped with a two-kind three-layer multi-manifold type coextrusion T die 7 and a winding machine having a mechanism for pressing a molten film 8 with a first mirror-finished roll 9 (i.e. a roll for holding and sending the molten film to the next transfer roll) and a second mirror-finished roll 10 (see FIG. 4), a poly(meth)acrylimide "PLEXIMID TT50" (trade name) manufactured by Evonik Industry AG as both outer layers (α1 layer and α2 layer) of a two-kind three-layer multilayer resin film and an aromatic polycarbonate "KARIBAR 301-4" (trade name) manufactured by Sumika Styron Polycarbonate Limited as an intermediate layer (β layer) of the two-kind three-layer multilayer resin film were continuously coextruded from the coextrusion T die 7 and supplied and pressed between the rotating first mirror-finished roll 9 and second mirror-finished roll 10 so that the α1 layer was on the first mirror-finished roll side, thereby obtaining a transparent resin film having a total thickness of 250 µm, a thickness of the α1 layer of 80 µm, a thickness of the β layer of 90 µm, and a thickness of the α2 layer of 80 µm. The conditions were as follows: the set temperature of the T-die was 300°C, the set temperature of the first mirror roll 9 was 130°C, the set temperature of the second mirror-finished roll 10 was 120°C, and the wind-up speed was 6.5 m/min.
(P-2) A transparent resin film was obtained in the same manner as in the (P-1) except that an acrylic resin comprised of a structural unit derived from methyl methacrylate in an amount of 76.8% by mole and a structural unit derived from vinylcyclohexane in an amount of 23.2% by mole with respect to 100% by mole of the sum of the structural units derived from the polymerizable monomers was used instead of the "PLEXIMID TT50" (trade name) as both outer layers.
(P-3) A biaxially stretched polyethylene terephthalate-based film "DIAFOIL" (trade name) of Mitsubishi Chemical Corporation, 250 µm in thickness.

### Example 1

Both surfaces of the (P-1) were subjected to a corona discharge treatment. The wetting index on both surfaces was each 64 mN/m. Subsequently, the (H2-1) was applied to the surface on the α2 layer side using a die type applicator so that the thickness thereof after being cured was 18 µm. Next, the coated (P-1) was allowed to pass through a drying oven of which the internal temperature was set to 80°C at a line speed at which the time required to pass from the inlet to the outlet was one minute and then treated under the conditions that the temperature of a mirror-finished metal roll 12 was 60°C and the integrated light quantity was 500 mJ/cm² using a curing apparatus in which a high pressure mercury lamp type ultraviolet irradiation apparatus 11 and the mirror-finished metal roll 12 having a diameter of 25.4 cm were disposed to face each other (see FIG. 5), thereby forming a second hard coat (in the drawing, reference sign 14 denotes a web and reference sign 13 denotes a holding angle). Subsequently, the (H3-1) was applied to the surface on the α1 layer side using a die type applicator so that the thickness thereof after being cured was 18 µm. Next, the coated (P-1) was allowed to pass through a drying oven of which the internal temperature was set to 90°C at a line speed at which the time required to pass from the inlet to the outlet was one minute and then treated under the conditions that the temperature of the mirror-finished metal roll 12 was 90°C and the integrated light quantity was 80 mJ/cm² using a curing apparatus in which the high pressure mercury lamp type ultraviolet irradiation apparatus 11 and the mirror-finished metal roll 12 having a diameter of 25.4 cm were disposed to face each other (see FIG. 5). As a result, the wet coat formed of the (H3-1) became a coat in a set-to-touch state (i.e. a tack free state). Subsequently, the coat in a set-to-touch state formed of the (H3-1) was coated with the (H1-1) by using a die-type applicator so that the thickness thereof after being cured was 2 µm. Subsequently, the coated (P-1) was allowed to pass through a drying oven of which the internal temperature was set to 80°C at a line speed at which the time required to pass from the inlet to the outlet was one minute and then treated under the conditions that the temperature of the mirror-finished metal roll 12 was 60°C and the integrated light quantity was 500 mJ/cm² using a curing apparatus in which the high pressure mercury lamp type ultraviolet irradiation apparatus 11 and the mirror-finished metal roll 12 having a diameter of 25.4 cm were disposed to face each other (see FIG. 5), thereby forming a first hard coat. An antiglare hard coat laminated film was thus obtained. The antiglare hard coat laminated film was subjected to the tests (i) to (xiii). The results are shown in Table 1.

The "1^{st} HC thickness" referred to in Table 1 represents the thickness of the first hard coat after being cured. The "2^{nd} HC thickness" referred to in Table 1 represents the thickness of the second hard coat after being cured. The "3^{rd} HC thickness" referred to in Table 1 represents the thickness of the third hard coat after being cured. The same applies to Tables 2 to 4. In addition, the phrase "a coat is in a set-to-touch state (i.e. a tack free state)" referred to in the present specification means that the coat is in a state in which there is no handling problem even when being directly touched to a web apparatus.

### Examples 2 to 4

The formation of hard coat laminated films and the measurement and evaluation of the physical properties thereof were performed in the same manner as in Example 1 except that the coating materials presented in Table 1 were used instead of the (H1-1) as the coating material for forming the first hard coat and the coating materials presented in Table 1 were used instead of the (H2-1) as the coating material for forming the second hard coat. The results are shown in Table 1.

### Examples 5 to 12 and 14

The formation of hard coat laminated films and the measurement and evaluation of the physical properties thereof were performed in the same manner as in Example 1 except that the coating materials presented in one of Tables 1 to 3 were used instead of the (H1-1) as the coating material for forming the first hard coat. The results are shown in one of Tables 1 to 3.

### Example 13

The formation of a hard coat laminated film and the measurement and evaluation of the physical properties thereof were performed in the same manner as in Example 1 except that the (H1-13) was used instead of the (H1-1) as the coating material for forming the first hard coat and the thickness of the first hard coat after being cured was changed to 3 µm. The results are shown in Table 3.

### Example 15

The formation of a hard coat laminated film and the measurement and evaluation of the physical properties thereof were performed in the same manner as in Example 1 except that the thickness of the first hard coat after being cured was changed to 1 µm. The results are shown in Table 3.

### Example 16

The formation of a hard coat laminated film and the measurement and evaluation of the physical properties thereof were performed in the same manner as in Example 1 except that the thickness of the first hard coat after being cured was changed to 3 µm. The results are shown in Table 4.

### Example 17

The formation of a hard coat laminated film and the measurement and evaluation of the physical properties thereof were performed in the same manner as in Example 1 except that the (P-2) was used instead of the (P-1) as the transparent resin film. The results are shown in Table 4.

### Example 18

The formation of a hard coat laminated film and the measurement and evaluation of the physical properties thereof were performed in the same manner as in Example 1 except that the (P-3) was used instead of the (P-1) as the transparent resin film. The results are shown in Table 4.

### Example 19

Both surfaces of the (P-1) were subjected to a corona discharge treatment. The wetting index on both surfaces was each 64 mN/m. Next, the (H1-1) was applied to the surface on the α1 layer side using a die type applicator so that the thickness thereof after being cured was 2 µm. Next, the coated (P-1) was allowed to pass through a drying oven of which the internal temperature was set to 80°C at a line speed at which the time required to pass from the inlet to the outlet was one minute and then treated under the conditions that the temperature of the mirror-finished metal roll 12 was 60°C and the integrated light quantity was 500 mJ/cm² using a curing apparatus in which the high pressure mercury lamp type ultraviolet irradiation apparatus 11 and the mirror-finished metal roll 12 having a diameter of 25.4 cm were disposed to face each other (see FIG. 5), thereby forming a first hard coat. An antiglare hard coat laminated film was thus obtained. The antiglare hard coat laminated film was subjected to the tests (i) to (xiii). The results are shown in Table 4.

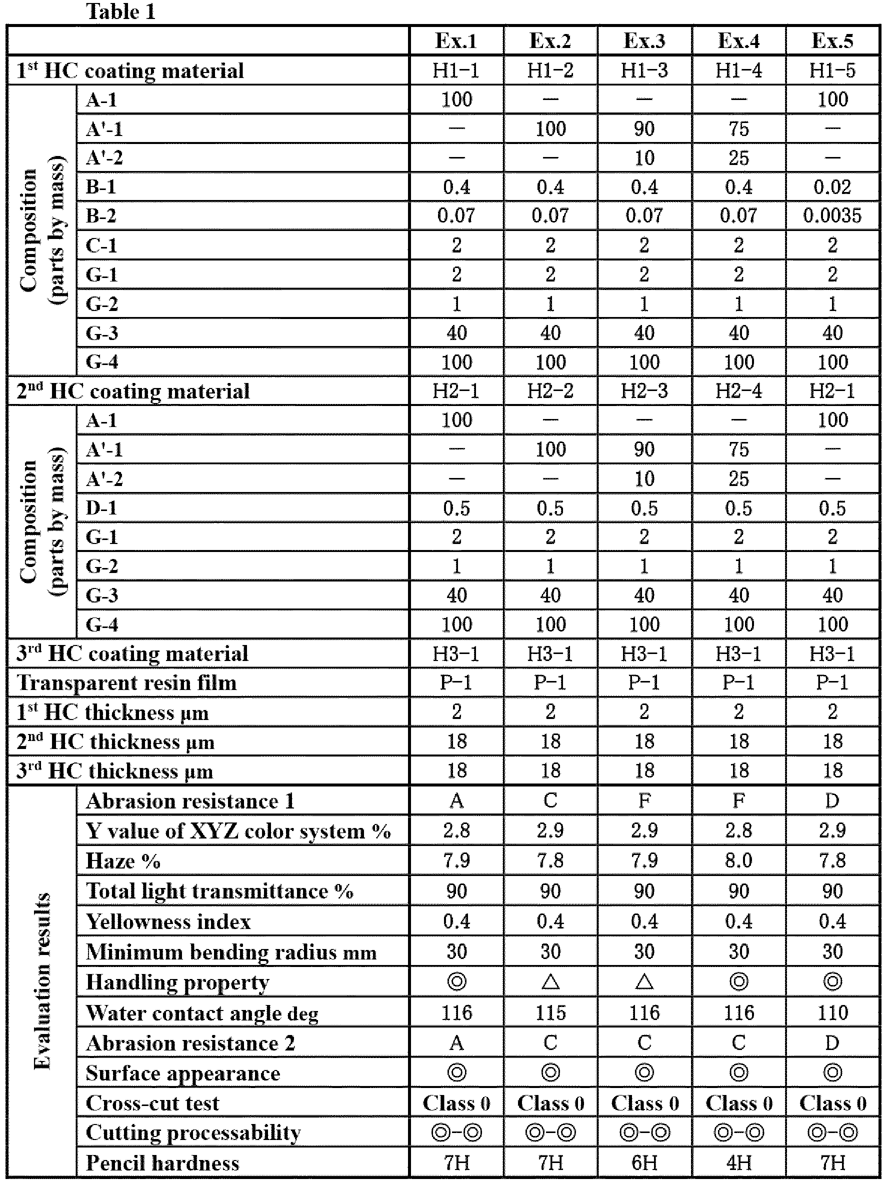

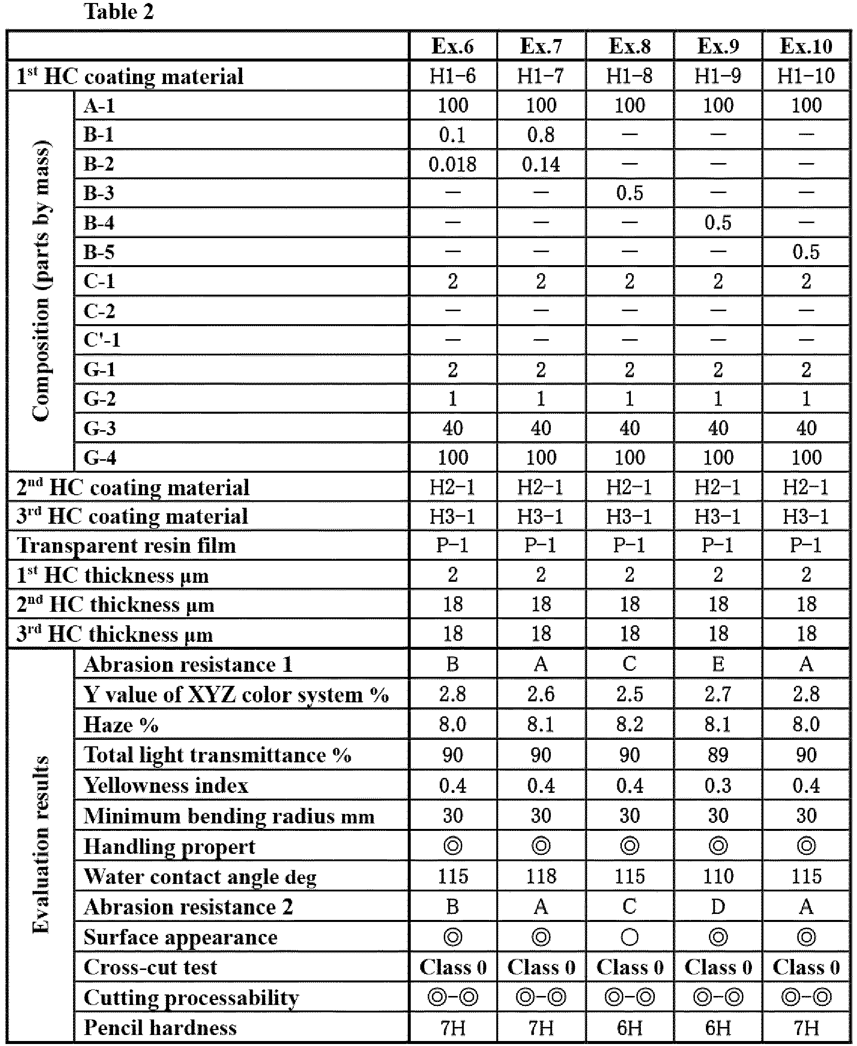

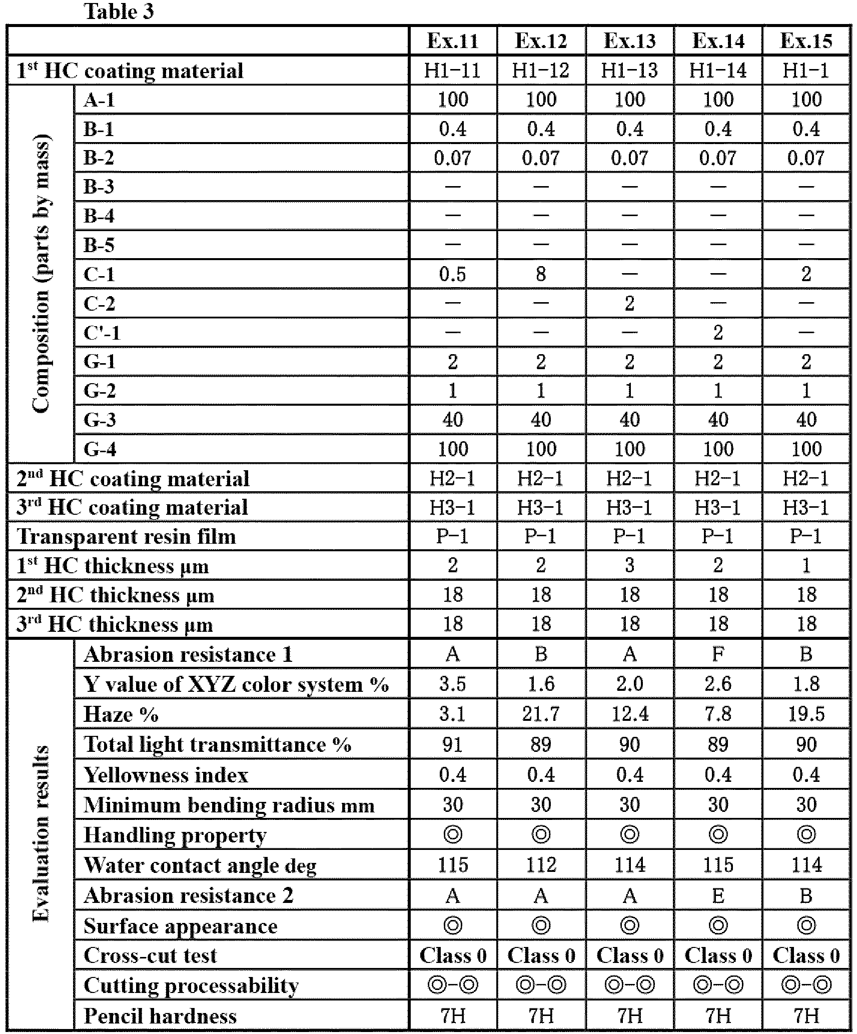

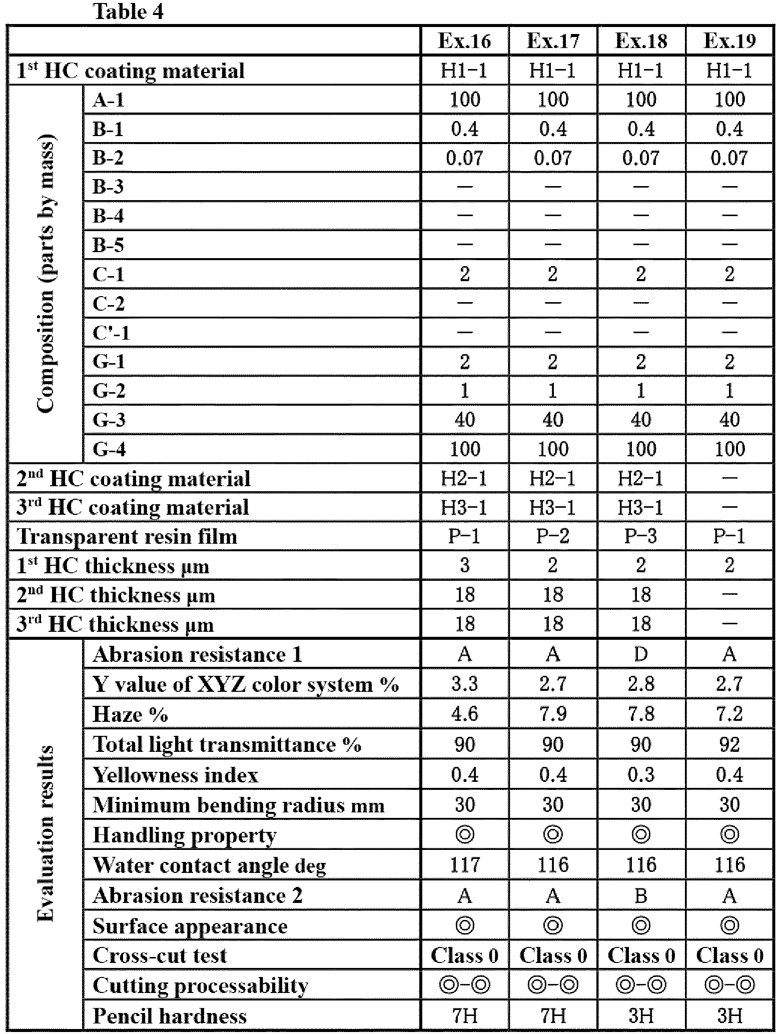

From these experimental results, it has been found that the antiglare hard coat laminated film of the present invention exhibits excellent antiglare property and good abrasion resistance. It has been found that a preferred antiglare hard coat laminated film of the present invention is excellent substantially in all of antiglare property, abrasion resistance, crack resistance, surface appearance, transparency, color tone, surface hardness, and bending resistance and thus exerts physical properties suitable as a display face plate of an image display device having a touch panel function.

### REFERENCE SIGNS LIST

- 1: First hard coat
- 2: Third hard coat
- 3: First poly(meth)acrylimide-based resin layer (α1)
- 4: Aromatic polycarbonate-based resin layer (β)
- 5: Second poly(meth)acrylimide-based resin layer (α2)
- 6: Second hard coat
- 7: Coextrusion T die
- 8: Melted film
- 9: First mirror-finished roll
- 10: Second mirror-finished roll
- 11: Ultraviolet irradiation apparatus
- 12: Mirror-finished metal roll
- 13: Web
- 14: Holding angle

## Claims

1. A hard coat laminated film sequentially comprising a first hard coat and a transparent resin film layer from a surface layer side, wherein
the first hard coat is formed from a coating material comprising:
100 parts by mass of (A) a copolymer of (al) a polyfunctional (meth)acrylate and (a2) a polyfunctional thiol;
0.01 to 7 parts by mass of (B) a water repellent; and
0.1 to 10 parts by mass of (C) fine resin particles having an average particle diameter of 0.5 to 10 µm, and
the coating material containing no inorganic particles.

2. A hard coat laminated film sequentially comprising a first hard coat and a transparent resin film layer from a surface layer side, wherein
the first hard coat is formed from a coating material comprising:
(A) a copolymer of (al) a polyfunctional (meth)acrylate and (a2) a polyfunctional thiol;
(B) a water repellent; and
(C) fine resin particles having an average particle diameter of 0.5 to 10 µm, and
the coating material containing no inorganic particles, and
the hard coat laminated film satisfies the following properties (i) to (iii):
(i) no scratches are found when the hard coat laminated film is placed on a Gakushin-type tester in accordance with JIS L0849:2013 so that the first hard coat is on the surface side; a steel wool of #0000 is subsequently attached to a rubbing finger of the Gakushin-type tester and a load of 500 g is then applied; and, after 100 reciprocating rubbings of the surface of the first hard coat under conditions that the moving speed of the rubbing finger is 300 mm/min and the moving distance is 30 mm, the rubbed portion is visually observed;
(ii) a total light transmittance is 85% or more; and
(iii) a Y value of an XYZ color system based on a 2-degree field of view is 1.5 to 4.2%.

3. The hard coat laminated film according to claim 1 or 2, sequentially comprising a first hard coat, a third hard coat, and a transparent resin film layer from a surface layer side, wherein
the third hard coat is formed from a coating material containing inorganic particles.

4. The hard coat laminated film according to any one of claims 1 to 3, wherein a sulfur content in (A) the copolymer is 0.1 to 12% by mass.

5. The hard coat laminated film according to any one of claims 1 to 4, wherein a mass average molecular weight of (A) the copolymer in terms of polystyrene determined from a differential molecular weight distribution curve measured by gel permeation chromatography using tetrahydrofuran as a mobile phase is 5,000 to 200,000.

6. The hard coat laminated film according to any one of claims 1 to 5, wherein (B) the water repellent contains a (meth)acryloyl group-containing fluorine-based water repellent.

7. An article comprising the hard coat laminated film according to any one of claims 1 to 6.
